# EUROPÄISCHE PATENTSCHRIFT

(11) **EP 3 264 587 B1**
(45) Veröffentlichungstag und Bekanntmachung des Hinweises auf die Patenterteilung: **17.02.2021**
(21) Anmeldenummer: 17178333.5
(22) Anmeldetag: 28.06.2017
(51) Int. Cl.: H02P 9/48, H02P 9/14

(54) **ENERGIEERZEUGUNGSSYSTEM MIT EINEM GENERATOR UND VERFAHREN ZUM BETRIEB EINES SOLCHEN ENERGIEERZEUGUNGSSYSTEMS**
ENERGY GENERATION SYSTEM COMPRISING A GENERATOR AND METHOD FOR OPERATING SUCH AN ENERGY GENERATION SYSTEM
SYSTÈME DE PRODUCTION D'ÉNERGIE COMPRENANT UN GÉNÉRATEUR ET SON PROCÉDÉ DE FONCTIONNEMENT

(30) Priorität: 28.06.2016 DE 102016111797
(43) Veröffentlichungstag der Anmeldung: 03.01.2018
(73) Patentinhaber: MARTIN Special Technics GmbH, 86720 Nördlingen (DE)
(72) Erfinder: Frank, Jürgen, 86698 Oberdorf am Lech (DE)
(74) Vertreter: Schorr, Peter Karl

(56) Entgegenhaltungen:
- WO-A2-2015/125591
- US-A1- 2014 103 854
- CALISKAN V ET AL: "Automotive Power Generation and Control", IEEE TRANSACTIONS ON POWER ELECTRONICS, INSTITUTE OF ELECTRICAL AND ELECTRONICS ENGINEERS, USA, Bd. 19, Nr. 3, 1. Mai 2004 (2004-05-01), Seiten 618-630, XP011112442, ISSN: 0885-8993, DOI: 10.1109/TPEL.2004.826432

## Beschreibung

Die vorliegende Erfindung betrifft einen Generator als Teil einer Vorrichtung zur Erzeugung einer elektrischen Energie, wobei die Vorrichtung auch einen Hochsetzsteller umfasst, der mit veränderbaren Ansteuerzeiten betreibbar ist. Die vorliegende Erfindung betrifft auch ein Verfahren, durch das elektrische Energie, erzeugt von dem Generator, abgebbar ist, wobei die Energie über einen Hochsetzsteller zur Verfügung gestellt wird, dessen Stromschalter gesteuert werden.

Mit anderen Worten, die vorliegende Erfindung behandelt ein Verfahren, insbesondere zum leistungsoptimierten, Betrieb eines Generators nach Oberbegriff des Anspruchs 1 und eine entsprechende Vorrichtung mit einem solchen Generator nach Oberbegriff des Anspruchs 5.

### Technisches Gebiet

In einer Anordnung zur Verfügungstellung von erzeugter elektrischer Energie, die aus einem motorisch angetriebenen Generator mit veränderbarer Drehzahl zu entnehmen ist, ist vorteilhafterweise, nicht zuletzt für Spannungsanpassungen der abzugebenden Spannung, wenigstens ein Spannungswandler, insbesondere des Typs Hochsetzsteller, verbaut. Günstig ist es, wenn die gesamte Anordnung so gesteuert wird, dass eine möglichst effiziente Energieerzeugung gegeben ist.

Für die Effizienzsteigerung der Energieerzeugung kann an zahlreichen Stellen in einer solchen Anordnung angesetzt werden, z. B.
1. bei der Art und des Typs des Generators,
2. bei der Art und Weise der Erregerspannung und des Betriebs der Erregerspule,
3. bei der Steuerung der Anordnung und
4. bei der Art und der Betriebsweise des Spannungswandlers.

So kann als Ausgangspunkt für weitere Entwicklungsüberlegungen z. B. festgelegt werden, dass ein asynchronartiger Generator zu verwenden ist.

### Stand der Technik

Eine nicht gattungsgemäße Vorrichtung sowie ein nicht gattungsgemäßes Verfahren ist bekannt aus WO 2015/125591 A2, bei der die elektrische Maschinen einen Motor umfasst.

Aus CALISKAN V ET AL: "Automotive Power Generation and Control", IEEE TRANSACTIONS ON POWER ELECTROICS, INSTITUTE OF ELECTRICAL AND ELECTRONIC ENGINEER, USA; Bd. 19, Nr. 3, 1. Mai 2004 (2004-05-01), Seiten 618-630 XP011112442 ist ein Verfahren zum Betrieb eines Generators bekannt.

In der Patentliteratur gibt es zahlreiche Beschreibungen von Generatoranordnungen und Verfahren zu deren Betrieb, beispielhaft seien die nachfolgenden Druckschriften aufgeführt:
- EP 0 929 927 B1 (Patentinhaberin: ROBERT BOSCH GMBH; Prioritätstag: 01.08.1997)
- EP 1 072 080 B1 (Patentinhaberin: ROBERT BOSCH GMBH; Prioritätstag: 29.01.1999)
- EP 1 186 476 B1 (Patentinhaberin: MITSUBISHI DENKI KABUSHIKI KAISHA; Prioritätstag: 06.09.2000)
- DE 10 2009 054 971 A1 (Anmelderin: LTi DRiVES GmbH; Anmeldetag: 18.12.2009).

In diesen Druckschriften EP 0 929 927 B1, EP 1 072 080 B1, EP 1 186 476 B1 und DE 10 2009 054 971 A1 werden dreiphasige bzw. mehrphasige Generatorsysteme beschrieben, bei denen eine Spannung von dem Generator durch Wandler an einen Spannungsbereich eines Verbrauchers angepasst wird. Die Druckschriften dienen zur Erläuterung zahlreicher technischer Zusammenhänge von Generator-Wandler-Systemen, die gleichermaßen auf vorliegende Erfindung zu übertragen sind.

Aus der DE 103 35 907 A1 (Anmelderin: Robert Bosch GmbH; Anmeldetag: 06.08.2003) kann die folgende Idee entnommen werden: eine elektronisch kommutierte Maschine zur Bereitstellung eines Spannungshochsetzstellers kann dadurch genutzt werden, dass zwischen einer Wicklung der Maschine und einem elektrisch in Reihe geschalteten elektronischen Schalter ein Abgriff liegt, der für die Spannungshochsetzung genutzt werden kann. Das Schaltprinzip der DE 103 35 907 A1 soll darauf basieren, dass die in die Wicklungen bzw. Spulen induzierte Spannung addierend oder auch subtrahierend zu einer Versorgungsspannung hinzutreten kann. Die drei gezeigten Ausführungsformen sind äußerst rudimentäre Darstellungen von im Wesentlichen zwei gekoppelte Spulen, die über Transistoren bzw. Schalter auf Masse kurzgeschlossen werden können. Eine umfängliche Offenbarung ist der DE 103 35 907 A1 nicht wirklich zu entnehmen.

Die US 2009/278 362 A1 (Anmelderin: Honda Motor Co., Ltd.; Prioritätstag: 09.05.2008) beschäftigt sich mit einem durch Magneten permanent erregten Drehphasengenerator, der von einem Motor angetrieben wird. Ein 12 Thyristoren umfassender Schaltregler soll aus drei Spannungen des Drehphasengenerators eine Wechselspannung mit entweder 50 Hz oder 60 Hz erzeugen. In Abhängigkeit von der gewünschten einphasigen Ausgangsfrequenz ergibt sich das Schaltmuster für die Thyristoren. Eine solche Schaltung kann auch mit dem Wort "Hüllkurvengenerator" beschrieben werden. Zudem soll der Motor nur stufenweise seine Drehzahl verändern können, je nachdem, welche Leistung von dem Schaltregler abverlangt wird. D. h., das in der US 2009/278 362 A1 vorgestellte Schaltprinzip ist für Motoren entwickelt worden, die nur in ganz festen Drehzahlen operieren können und die elektrische Leistung auf Basis einer Spannung mit nur einer einzigen Ausgangsfrequenz erzeugen sollen.

Die DE 198 45 569 A1 (Anmelderin: Robert Bosch GmbH; Prioritäten: 11.10.1997 und 03.02.1998) beschreibt vier Ausführungsbeispiele eines Klauenpolgenerators, der mithilfe eines mit MOS-FETs realisierten Hochsetzstellers eine Spannungsanpassung an ein 42V-Bordnetz vornehmen kann. Die Spannung des Generators wird über einen Spannungsregler geregelt, der den Feldstrom für die Feldwicklung vorgibt. Aufgrund des Kurzschließens der Diodenbrücke, die auch durch einen MOS-FET verwirklicht sein kann, findet ein sogenanntes "Boosten" des Generators, genauer der Spannung einer Generatorwicklung statt. Zusammenfassend könnte auch gesagt werden, die DE 198 45 569 A1 schlägt vor, die Spulen bzw. die Induktivitäten, ebenfalls bzw. ähnlich zur DE 103 35 907 A1, im konkreten Fall des Klauenpolgeneratos, als Energiespeicher zu nutzen. Die Druckschrift erläutert, dass die Diodenbrücke durch einen Kurzschluss der Sekundärseite des Vollbrückengleichrichters phasenweise inaktiv geschaltet wird, wodurch sich eine Spannungserhöhung aufbauen kann. Durch Sperren des Transistors bzw. des MOS-FETs wird die in den Ständerinduktivitäten zwischengespeicherte Energie in Form von induzierter Spannung freigegeben. Die Druckschrift lässt sich ausschließlich über äußerst simpel gehaltene Prinzipschaltbilder aus, ein exakter Nachbau wird so nicht ermöglicht, u. a., weil das dazugehörige Betriebsverfahren vollständig im Dunkeln belassen wird.

Die DE 10 2011 053 982 A1 (Anmelderin: LTi DRiVES GmbH; Anmeldetag: 27.09.2011) behandelt einen n-phasigen Stromgenerator mit einer Gleichrichtereinrichtung mit n-Halbbrücken. In der Ausgestaltung eines Einphasen-Versorgungsnetzes umfasst die Netzwechselrichtereinheit zwei Halbbrücken, in denen jeweils zwei Schaltelemente mit parallel geschalteten Freilaufdioden zur Erzeugung einer PWM-modulierten Wechselspannung an einem Wechselrichter-Halbbrücken-Mittelabgriff miteinander verbunden sind. Bei einer Dreiphasen-Netzversorgungseinrichtung haben eine Gleichrichtereinrichtung, eine Wechselrichtereinrichtung und eine Netzwechselrichtereinrichtung drei Halbbrücken. Die DE 10 2011 053 982 A1 erkennt, wenn eine Generator-Kontaktseite über einen Wechselrichter mit dem DC-Zwischenkreis verbunden ist, ist ein Hochsetzstellerbetrieb möglich und die Gleichspannung kann in weiten Bereichen drehzahlunabhängig stabilisiert werden. Die Schaltelemente werden über eine Steuervorrichtung angesteuert, die Informationen der Drehzahl über einen mechanischen Drehzahlsensor erfasst, um phasen- bzw. drehzahlabhängig die Schaltelemente der Wechselrichtereinrichtung zu betätigen. Als inhärentes Problem wird jedoch bei dieser Art der Schaltungsanordnung bereits in der Beschreibungseinleitung der DE 10 2011 053 982 A1 ausgeführt, dass die zusätzlichen Schaltverluste nachteilig sind, wodurch der Wirkungsgrad absinkt.

Ähnlich zur DE 10 2011 053 982 A1 beschäftigt sich die US 5 946 202 A (Anmelderin: Baker Hughes Inc.; Anmeldetag: 22.01.1998) mit der Ansteuerung einzelner Leistungsschalter. Die US 5 946 202 A ist eine "continuation-in-part" zu der Anmeldung US 5 793 625 A (Anmelderin: Baker Hughes Inc.; Anmeldetag: 24.01.1997). Die beiden Dokumente US 5 946 202 A und US 5 793 625 A beschäftigen sich mit einem Boost-Mode-Regler, also mit einem Hochsetzsteller. In der US 5 946 202 A steht der Vorschlag, Energie aus Spulen des Generators zu beziehen und Leistungshalbschalter des Typs FET mit einer konstanten Schaltfrequenz von 100 kHz zu betreiben. Zusätzlich soll der "duty-cycle", also das Tastverhältnis des PWM-Schaltsignals der FETs in Abhängigkeit von der Drehzahl des Generators angepasst werden. Die Drehzahl des Generators darf laut US 5 793 625 A in einem Drehzahlbereich von ca. 1100 Umdrehungen/Minute bis ca. 5000 Umdrehungen/Minute variieren. Die Tabellen in der US 5 793 625 A listen auf, dass die Verlustleistung eines so gestalteten Generators bei hohen Drehzahlen des Generators vergleichsweise gering, jedoch bei niedrigen Drehzahlen äußerst beachtlich ist. Wird als Antriebsmaschine für einen solchen Generator ein Otto-Kraftstoffmotor verwendet, so hat dieser in der Regel im niedrigen Drehzahlbereich schon ein ungünstigeres Kraftstoff-Leistungsverhältnis, wobei in jenem Drehzahlbereich auch die elektrischen Verluste des Generators besonders hoch sind.

Ein Klauenpolgenerator wird in der US 2006/214 426 A1 (Erfinder: Yoshihito Asao et al.; Prioritätstag: 18.02.2004) zusammen mit einem Wechselrichter beschrieben. Eine Spannungserhöhung bei niedrigen Drehzahlen des Klauenpolgenerators soll durch die geeignete Wahl der An-Aus-Zeiten der Schalter des Wechselrichters erreicht werden. Bei niedrigen Drehzahlen soll außerdem der Erregerstrom niedrig gehalten werden. Mit steigenden Drehzahlen soll auch der Erregerstrom ansteigen. Es gibt aber zumindest eine Stelle in der Erregerstromkennlinie, an der ein Wechsel von einer ersten Erregerstromkurve auf eine zweite Erregerstromkurve erfolgt. Die in der US 2006/214 426 A1 gezeigte Erregerstromkennlinie sieht wie eine aus mehreren Hyperbelhalbzweigen stückweise zusammengesetzte Kurve aus, die sich von einer Hyperbel auf die nächste Hyperbel kontinuierlich fortsetzt. Das Drehmoment eines solchen Generators scheint sehr stark zu schwanken. Schwankende Drehmomente drücken sich z. B. in Schlägen auf den Trieben der Nebenaggregate des Antriebsmotors aus. Ein weiteres Steuerungsverfahren eines Klauenpolgenerators mit einem Pluswechselrichter ist in der DE 198 49 889 A1 (Anmelderin: Robert Bosch GmbH; Anmeldetag: 29.10.1998) beschrieben. Drei Regelbereiche, in denen unterschiedliche Kurven und Gleichungen gelten sollen, bilden die Gesamtregelung, zu der noch ein Regelbereich als Sicherheitsregelbereich bei extremen Lastabwürfen hinzukommt. Der so geschaffene übergeordnete Regler soll mit Hilfe einer mehrdimensionalen Tabelle den Blind- und den Wirkanteil des Generatorstroms beeinflussen, der von der Generatordrehzahl abhängt. Hierzu beeinflusst der Regler den Erregerstrom. Die Strangspannung auf einem Strang des Klauenpolgenerators darf hierbei der maximalen Spannung des Pulswechselrichters entsprechen. Statt am Erregerstrom herumzustellen, sollte eine geeignete Schaltung sicherlich noch andere Stellschrauben anbieten, durch die ein leistungsoptimierter Betrieb unterstützt wird.

### Aufgabenstellung

Die Fachwelt beobachtet einen steigenden Bedarf an mobilen Wechselstromversorgungen in einem Mittelspannungsbereich, insbesondere für eine Nennspannung von 230 V, die vorteilhafterweise in Kraftfahrzeugen, insbesondere der Kategorie Nutzfahrzeug, einbaubar sind. Bei verbrennungsmotorisch angetriebenen Kraftfahrzeugen variiert die Drehzahl der Motorwelle häufig in einem weiten Drehzahlbereich. Trotzdem ist eine möglichst konstante Ausgangsspannung an dem Wechselstromgenerator zur Verfügung zu stellen.

Diese gewünschte stabilisierte Ausgangsspannung ist möglich zu machen unter Beachtung von Energieeffizienzkriterien und einem zulässigen Bauraum, der insbesondere bei kleineren Nutzfahrzeugen äußerst begrenzt ist.

### Erfindungsbeschreibung

Die erfindungsgemäße Aufgabe wird durch ein Verfahren nach Anspruch 1 gelöst, eine Vorrichtung zur Energieerzeugung einer elektrischen Energie lässt sich Anspruch 7 entnehmen. Vorteilhafte Weiterbildungen lassen sich den abhängigen Ansprüchen entnehmen.

Einige Komponenten, die zu einer Anordnung zur Erzeugung von elektrischer Energie zusammengefügt werden können, sind
- ein Generator, der insbesondere fremderregt ist,
- ein Hochsetzsteller, der insbesondere über pulsweitenmodulierte Steuersignale betätigt wird,
- eine Steuerung, die insbesondere die Schaltzeitpunkte des Hochsetzstellers bestimmt, und
- ein Gleichspannungsenergiespeicher wie z. B. ein Gleichspannungszwischenkreis.

Diese Komponenten Generator, Hochsetzsteller, Steuerung und Gleichspannungsenergiespeicher, insbesondere unter Verwendung von weiteren Komponenten wie einer Sechspuls-Brückenschaltung und/oder einem Wechsel-(spannungs-)richter, können zusammengefügt werden, um eine Vorrichtung zur Energieerzeugung einer elektrischen Energie zu bilden. Schwerpunktmäßig kann dabei die Steuerung zur Steigerung des Wirkungsgrades betrachtet werden, mit anderen Worten, mithilfe der Steuerung kann ein leistungsoptimierter Betrieb angestrebt werden.

Der Hochsetzsteller hat Schaltelemente, durch die ein Stromfluss beeinflussbar ist. Der Hochsetzsteller kann mithilfe der Steuerung in seiner Arbeits- bzw. Betriebsweise verändert werden. Dazu hat der Hochsetzsteller Steuereingänge. Über die Steuereingänge können z. B. pulsweitenmodulierte Steuersignale auf den Hochsetzsteller aufgebracht werden. Mit anderen Worten, es handelt sich um einen durch eine Pulsweitenmodulation in seinen Durchschaltzeiten veränderbarer Hochsetzsteller. Idealerweise hat der Hochsetzsteller für jede Phase des Generators einen eigenen Steuerzweig. In jedem Zweig sind wenigstens zwei Schaltelemente angebracht. Als Schaltelemente eignen sich stromsteuernde Schaltelemente, die auch als Stromschalter bezeichnet werden können, insbesondere in der Ausgestaltung der Halbleiterbauteile der Elektronik wie MOS-FET oder IGBT.

Der Generator ist für einen unteren und einen oberen Drehzahlbereich ausgelegt. Der Generator bewegt sich daher, insbesondere in Abhängigkeit von einer verbrennungsmotorischen Motorwellendrehzahl, innerhalb eines Drehzahlfensters. Auf das mögliche Drehzahlfenster, den möglichen Drehzahlbereich abgestimmt ist der Hochsetzsteller ausgelegt. Der Hochsetzsteller ist so ausgelegt, dass er innerhalb eines Frequenzbereiches bezüglich des An- und Ausschaltens der einzelnen Schaltelemente, insbesondere der Stromschalter, betrieben werden kann.

Die Steuerung, insbesondere wenn sie ein Steuergerät umfasst, umfasst vorteilhafterweise eine Treiberstufe. Über eine solche Treiberstufe kann der Hochsetzsteller bzw. seine Schaltelemente angesteuert werden. Die Treiberstufe ist ebenfalls für den Frequenzbereich, in dem die Schaltelemente wie Stromschalter betrieben werden, ausgelegt. Durch die Treiberstufe wird der Hochsetzsteller angesteuert.

Eine Erkenntnis besteht darin, dass die Stromschalter im Laufe des Betriebs zu unterschiedlichen bzw. sich verändernden Zeitpunkten eingeschaltet werden können. Ein und der gleiche Stromschalter wird nicht konstant jeweils mit der gleichen Ansteuerfrequenz ein- oder ausgeschaltet. Die Schaltzeitpunkte werden adaptiert. Der genaue Zeitpunkt, zu dem ein Stromschalter ein- und/oder ausschalten soll, hängt von der (gerade aktuellen) Generatorspannung bzw. der Frequenz der Kurvenform des Generators ab, z. B. auch nur innerhalb eines gefilterten Frequenzbandes, d. h. einer Frequenz, einer Harmonischen aus dem Frequenzspektrum oder einer Grundform.

Eine Ansteuerfrequenz der Stromschalter hängt nach einem Aspekt bzw. in einer besonders vorteilhaften Ausgestaltung von einer Drehzahl des Generators ab. Die Drehzahl des Generators, also der Welle oder eines Spannungsverlaufs des Generators, beeinflusst - in dieser Ausgestaltung - die Ansteuerung. Mit anderen Worten, die Ansteuerfrequenz wird in Abhängigkeit einer Drehzahl des Generators variiert. Die Beziehung zwischen der Drehzahl und der jeweiligen, dazugehörigen Ansteuerfrequenz kann über eine Funktion oder ein Diagramm ausgedrückt werden. Zwischen der einen Variablen, der Drehzahl des Generators, und der anderen Variablen, der Frequenz zum Ansteuern der Schaltelemente, kann eine (mathematische) Kurve gebildet werden. Es besteht zwischen den beiden Variablen in bestimmten Bereichen eine Proportionalität. Die Bereiche umfassen abgegrenzte Stücke des Kurvenverlaufs. Die Kurve kann als eine stückweise stetige Kurve beschrieben werden. Das Verhältnis innerhalb des jeweiligen Stücks ist insbesondere linear. Es existiert eine Proportionalität zwischen Drehzahl und Ansteuerfrequenz. In diesem Fall drückt sich die Proportionalität, d. h. der beiden Variablen, durch eine lineare Kurve aus. An dieser Stelle sei klarstellend angesprochen, dass neben diesen beiden Variablen auch noch weitere Eingangsgrößen oder Variablen Einfluss auf die Ansteuerfrequenz entfalten können. Die Proportionalität ist insbesondere dann zu beobachten, wenn die übrigen Eingangsgrößen oder Variablen zur Beeinflussung der Ansteuerfrequenz konstant gehalten werden.

Das stückweise stetige Verhältnis zwischen Drehzahl und Ansteuerfrequenz wird aber an wenigstens einem Punkt der Kurve, vorzugsweise an zwei oder mehr Stellen, durchbrochen. Bei Erreichen wenigstens einer Frequenz oder Drehzahl des Generators weist die Kurve einen Umschaltpunkt auf. Im Bereich des Umschaltpunkts hat das Verhältnis zwischen Drehzahl und Ansteuerfrequenz einen abweichenden Verlauf. Die Kurve wird durch einen unstetigen Sprung angepasst. Der Verlauf kann z. B. in Bezug auf die Drehzahlveränderung des Generators beschrieben werden. In einem ersten, niedrigeren Drehzahlbereich ist eine erste Steigung der Kurve vorhanden. Das Verhältnis drückt sich insbesondere durch eine lineare Proportionalität aus. In einem zweiten Drehzahlbereich des Generators, insbesondere mit einer höheren Frequenz versehenen Drehzahlbereich als dem ersten Drehzahlbereich, gibt es einen Kurvenabschnitt, der durch eine andere, insbesondere lineare Gleichung zu beschreiben ist. Zwischen beiden Drehzahlbereichen gibt es einen Übergang. Bei diesem Übergang von einer ersten, niedrigeren Drehzahl auf eine zweite, höhere Drehzahl des Generators wird die Ansteuerfrequenz reduziert.

Nach einem weiteren Aspekt kann das Einschalten und Ausschalten des wenigstens einen Stromschalters, vorzugsweise der jeweils pro Spannungsstrang paarweise vorhandenen Stromschalter, anhand von Boostfaktoren beeinflusst werden. Ein jeweiliger Boostfaktor bestimmt sich aus einem aktuellen Wert einer Generatorspannung, also des Spannungswerts, der auf einem der Leistungsbündel zu einem bestimmten Zeitpunkt vorhanden ist.

Eine Vorrichtung zur Umsetzung des zuvor beschriebenen Energieerzeugungsverfahrens einer elektrischen Energie kann also wenigstens zwei der folgenden Teile bzw. Komponenten aufweisen:
- einen elektrischen Generator, der elektrisch erregbar ist,
- einen elektronischen Hochsetzsteller, insbesondere einem mehrphasigen Hochsetzsteller,
- ein Steuergerät, das für eine Ansteuerung von Stromschaltern des Hochsetzstellers in Abhängigkeit einer Drehzahl des Generators ausgestaltet ist, und
- ein Gleichspannungsenergiespeicher, z. B. ein Gleichspannungszwischenkreis oder eine Gleichspannungsquelle wie ein Akkumulator, aus dem eine veränderbare Erregerspannung für den Generator beziehbar ist

Auf einer solchen Anordnung ist es insbesondere möglich, mithilfe des Steuergeräts das zuvor beschriebene Verfahren auf der Vorrichtung zu betreiben.

Die Steuerung kann permanent bzw. zu ausgewählten Zeitpunkten (im Rahmen einer Recheneinheitsgeschwindigkeit wie einem Prozessor und seinem Code) einen Boostfaktor berechnen. Die Steuerung ist für die Berechnung von mehreren Boostfaktoren gestaltet. Die Steuerung bestimmt bzw. bildet die Boostfaktoren, insbesondere im laufenden Betrieb.

Eine besonders interessante Information ist die gerade anliegende Momentanspannung, die von dem Generator an einem Generatorstrang bezogen werden kann. Die Momentanspannung ändert sich. Die Generatorspannung ist eine in ihrem zeitlichen Verlauf veränderbare Größe. Die Momentanspannung hat eine Amplitude gerade in jenem Moment der Messung oder Bestimmung. Die Generatorspannung wird zu verschiedenen Zeitpunkten (innerhalb einer Phase oder einer Periode) bestimmt. Auf Basis dieser Information, der Information auf Basis der jeweiligen Momentanspannung findet eine Berechnung statt. Ein Fachmann versteht, dass als Berechnung auch das Arbeiten mit Tabellenwerken zu verstehen ist. Aus der Momentanspannung als Rechengröße(n) werden Ansteuerpunkte bestimmt. Die Ansteuerpunkte der Stromschalter hängen von den Boostfaktoren ab. Die Boostfaktoren sind im zeitlichen Verlauf veränderbare Boostfaktoren.

Durch eine an das Verhalten des Generators, wie z. B. der Drehzahl des Generators, des gezogenen Stroms aus dem Generator, der zur Verfügung stehenden Spannung des Generators usw., angepasste Steuerung der Schaltelemente bzw. des Hochsetzstellers lassen sich u. a. Schaltverluste reduzieren.

Die Ansteuerung bzw. die Festlegung der Schaltpunkte der Stromschalter kann sowohl in Abhängigkeit von den Boostfaktoren als auch durch die aktuelle Drehzahl des Generators oder der Frequenz der erzeugten Generatorspannung beeinflusst werden. Die Schaltpunktveränderung in Abhängigkeit der Boostfaktoren und die Schaltpunktveränderung in Abhängigkeit von der Generatordrehzahl bzw. Generatorspannung stellt eine Optimierung dar. Besonders vorteilhaft ist es, wenn beide Schaltpunktoptimierungen angewendet werden. Bildlich gesprochen kann gesagt werden, die durch die Drehzahl oder die Spannungsfrequenz beeinflussten Schaltpunkte der Stromschalter werden auf der Zeitachse noch zusätzlich durch die Boostfaktoren beeinflusst bzw. verändert.

Zum einen wird die Drehzahl des Generators berücksichtigt. Zum anderen wird die genaue Kurvenform der Spannung des Generators, die ebenfalls drehzahlabhängig ist, berücksichtigt. Die Ansteuerfrequenz der Schalter beträgt idealerweise ein Mehrfaches im Vergleich zur Frequenz der Spannung des Generators. Hierdurch ist es möglich, selbst in Abhängigkeit von der momentanen Spannung an einem Strang des Generators den Anschaltzeitpunkt und den Ausschaltzeitpunkt anzupassen.

Es ist aber auch verständlich, dass es Fälle gibt, bei denen nur eine der beiden Optimierungen Anwendung findet (z. B. bei Generatoren an (besonders) langsam laufenden Motoren, die also nur einen kleinen Drehzahlbereich bzw. Drehzahlfenster abdecken müssen; z. B. bei Generatoren, die einen Spannungskurvenverlauf haben, der äußerst sinusähnlich ist).

Nachfolgend werden vorteilhafte Ausgestaltungen und Weiterbildungen dargelegt, die für sich gesehen, sowohl einzeln aus auch in Kombination, ebenfalls erfinderische Aspekte offenbaren können.

Vorteilhafterweise wird der Bereich, in dem sich die Ansteuerfrequenz bewegen darf, festgelegt. Wie zuvor festgehalten, hängt die tatsächliche Ansteuerfrequenz von der zum Zeitpunkt der Ansteuerung vorherrschenden Generatorfrequenz ab. Zwischen der Generatorfrequenz und der Ansteuerfrequenz kann in einer günstigen Ausgestaltung ein solches Verhältnis eingestellt werden, dass die Frequenz der Ansteuerung, die Ansteuerfrequenz höher ist als die Generatorfrequenz. Diese punktuelle Beziehung lässt sich auf den gesamten Drehzahlbereich des Generators erweitern. In einer günstigen Weiterbildung kann die Generatorfrequenz immer niedriger als die Ansteuerfrequenz sein. Insbesondere stets ist bei allen Drehzahlen des Generators die Ansteuerfrequenz höher. Es erfolgt eine höherfrequente Ansteuerung als eine in einem Moment vorhandene Drehzahl des Generators (Momentandrehzahl des Generators).

Als ein Vorteil des erfindungsgemäßen Verfahrens kann hervorgehoben werden, dass dank des Verfahrens bzw. der Anordnung ein nicht lückender Laststrom an eine Last abgegeben werden kann. Harmonische werden reduziert, d. h. die Spannungen mit einem Mehrfachen der Basisfrequenz werden in ihren Amplituden bzw. in ihren Verläufen gedämpft. Der Laststrom folgt einem Sinusverlauf in ähnlicher Weise. Der Laststrom, insbesondere als mehrphasiger Laststrom wie ein dreiphasiger Laststrom, hat einen sinusähnlichen Verlauf.

Ein zentrales Element der Steuerung kann ein Steuergerät sein. Die Steuerung ist unter Verwendung eines Steuergeräts realisierbar. In Abhängigkeit einer Drehzahl, insbesondere der Momentandrehzahl, des Generators erfolgt eine Steuerung der Stromschalter. Als Stromschalter kommen insbesondere N-Kanal-MOS-FETs, vorzugsweise des Typs N-Kanal-Anreicherungstyp-MOS-FET, in Frage. Auch könnten IGBTs verwendet werden. Triacs und Thyristoren lassen sich ebenfalls verbauen (sofern entsprechende Außenschaltungen vorgesehen werden). Zwischen zwei Leitungen des Generators können zwei MOS-FETs in wechselweise sperrender Ausführung bzw. Schaltungsanordnung platziert sein. Der Hochsetzsteller wird in Abhängigkeit der gerade in jenem Moment vorhandenen Drehzahl ein- und/oder ausgeschaltet.

Die Energie, die im Gleichspannungsenergiespeicher vorhanden ist, kann wenigstens zum Teil dazu verwendet werden, eine Erregerspannung zur Verfügung zu stellen. Die Erregerspannung ist eine elektrische Spannung, die an der Erregerspule vorhanden ist. Die Energie wird anhand einer Erregerspannung für eine Erregung des Generators zurück an den Generator geliefert. Ein Teil der Energie wird als Energie für die Erregung des, insbesondere mehrphasigen, Generators (zurück-)geliefert. So bietet die Schaltung einen unmittelbaren Rückkopplungszweig, durch den eine effiziente Einstellung der abzugebenden Leistung beeinflusst, insbesondere eingestellt werden kann.

Als Spannungsquelle für die Erregerspannung kommen verschiedene Spannungsquellen in Betracht. Beispielsweise kann ein Teil der Energie in dem Gleichspannungsenergiespeicher dazu verwendet werden, die Erregerenergie zur Verfügung zu stellen. Die Spannung aus dem Gleichspannungszwischenkreis wird - ggf. transformiert oder in ihrem Wert angepasst - an die Erregerspule des Generators weitergeleitet. Eine weitere Quelle stellt eine Energiehilfsquelle dar. In einem Kraftfahrzeug kann z. B. die Starterbatterie als Spannungsquelle für die Erregerspannung genutzt werden. Die Energie aus der Starterbatterie kann spannungsmäßig angepasst ggf. auf die Erregerspule des Generators geführt werden. In dem Fall, in dem eine zusätzliche Starterbatterie oder sonstige Energiehilfsquelle verwendet wird, steht (nahezu) die gesamte Energie des Gleichspannungsenergiespeichers zur Abgabe an eine Last zur Verfügung. Anhand der Erregerspannung kann aufgrund der bekannten Werte wie Induktivität und ohmscher Widerstand der Erregerspule der Erregerstrom abgeleitet werden.

Die Spannung, die von dem Generator abgegeben wird, ist eine wechselspannungsartige Spannung, die ähnlich eines Sinusverlaufs ist. Idealerweise arbeitet eine Steuerung des Generators nicht nur mit einem einzigen Spannungswert, sondern die Steuerung ist so schnell, dass sie mehrere Spannungsmesspunkte mit dem gerade im Moment der Messung aktuellen Spannungswert berücksichtigen kann. Die Arbeitszeiten bzw. die Bearbeitungszeiten der Steuerungen zu einem einzelnen Messpunkt kann z. B. nur 2 ms bis 3 ms betragen, während die Periodizität des Spannungsverlaufs z. B. bei 20 ms liegt. Die Spannung hat eine Kurvenform. Die Spannung lässt sich anhand ihres Verlaufs der Spannungsform beschreiben. Zu unterschiedlichen Zeitpunkten während eines Verlaufs einer Spannungsform lässt sich aus dem gerade in jenem Moment anliegenden Spannungswert ein Boost-Faktor ableiten. Die Spannung ist die aus dem Generator stammende Spannung. Es werden so während einer Periodizität des wiederkehrenden Spannungsverlaufs mehrere Boost-Faktoren gebildet. Die jeweiligen Momentanspannungen, die aus einer im zeitlichen Verlauf veränderbaren Generatorspannung zu verschiedenen Zeitpunkten bestimmt werden, sind Ausgangsgrößen für Berechnungen. Die Momentanspannung, die sich in Abhängigkeit vom Zeitpunkt ändert, ist eine Rechengrößen für eine Ermittlung von Ansteuerpunkten der Stromschalter. Die Stromschalter werden in Abhängigkeit der aktuell gemessenen Spannung ein- und ausgeschaltet, d. h., mit unterschiedlichen Spannungen, es kann auch gesagt werden, wird eine Veränderung der Spannung gemessen oder erkannt, werden unterschiedlich lange Anschaltphasen der Stromschalter betrieben. Die Momentanspannungen dienen zur Bestimmung der im zeitlichen Verlauf veränderbaren Boost-Faktoren.

Eine vorteilhafte Steuerung besteht darin, den Generator so zu steuern, dass Phasen mit einer Durchschaltzeit, insbesondere der Stromschalter, angepasst werden. Demgegenüber gibt es auch Phasen mit einer Sperrzeit, die auch als Auszeiten oder Dunkeltastphasen bezeichnet werden können. Die Phasen mit Sperrzeiten können konstant gehalten werden. Vorteilhafterweise werden die jeweiligen Gesamtzeiten konstant gehalten, insbesondere wenn einmal eine drehzahlabhängige Schaltfrequenz gewählt bzw. in Abhängigkeit der Drehzahl des Generators festgelegt worden ist. Der Stromschalter wird durch die An- und durch die Auszeiten angesteuert. Die Auszeiten können z. B. konstant gehalten werden. Bei einem solchen Verfahren bleibt die Auszeit immer gleich lang. Nur die Anzeit passt sich an die Spannung(en) des Generators an. Die Anzeiten werden angepasst, die Auszeiten bleiben immer in einem identischen Zeitfensterbereich.

In einer alternativen Ausgestaltung wird die Gesamtzeit, die sich aus einer Auszeit und einer Durchschaltzeit zusammensetzt, konstant gehalten. Wird die Durchschaltzeit angepasst, so wird die Sperrzeit bzw. Ausschaltzeit entsprechend in die gegenteilige Richtung angepasst. Als Beispiel sei aufgezeigt. Als Gesamtzeit wird 10 ms aufgrund der momentanen Drehzahl des Generators bestimmt. Wird eine Durchschaltzeit um 0,5 ms verkürzt, so ist die Sperrzeit um den Betrag dieser Zeit zu verlängern. Wird die Durchschaltzeit um 1 ms verlängert, so ist die Sperrzeit um diese Zeitdifferenz zu verkürzen.

Es können die An- und die Auszeiten in ein Verhältnis zueinander gesetzt werden. Es kann von einem Verhältnis der Phasen gesprochen werden. Vorzugsweise ist das Verhältnis der Phasen so aufeinander abgestimmt, dass sich darin der jeweilige Boostfaktor wiederspiegelt.

Besonders vorteilhaft ist es, wenn bei großem Boostfaktor auch die Durchschaltzeit einen größeren Wert hat. Hat der Boostfaktor einen kleineren Wert, so ist die Durchschaltzeit im gleichen Maße zu verkürzen. In einer Ausgestaltung kann eine Regelzeit für einen Regelboostfaktor festgelegt werden. Weicht der tatsächliche Boostfaktor von dem Regelboostfaktor um einen Wert ab, so ist die Durchschaltzeit in einem äquivalenten Maß von der Regelzeit abzuändern. Verkürzt kann gesagt werden, in dieser Ausgestaltung entspricht die Verhältnisbildung zwischen aktuellen Boostfaktor und aktueller Durchschaltzeit der folgenden Faustformel: ansteigender Boostfaktor entspricht ansteigender Durchschaltzeit, absinkender Boostfaktor entspricht absinkender Durchschaltzeit.

Die Vorrichtung umfasst in einer besonders einfachen und vorteilhaften Ausgestaltung einen Generator, der ein Klauenpolgenerator ist. Ein Klauenpolgenerator ist ein für den Automobilbau geeigneter Generator. Bei einem Klauenpolgenerator sind die einzelnen Pole wie Klauen gestaltet. In einem Klauenpolgenerator wird ein Läuferfeld von zacken- oder klauenartig ausgeformten Polen erzeugt. Der Klauenpolgenerator hat positive und negative Pole. Die Polpaare können gezählt werden. Die Polzahl ist vorteilhafterweise eine natürliche, gerade Zahl, es gibt eine geradezahlige Polzahl. Als günstige Konfiguration für ein 3-Phasen-System mit Klauenpolgenerator hat sich eine Wicklung des Generators erwiesen, die mit wenigstens 12 Polen ausgestaltet ist. Das heißt, es sind wenigstens 6 Polpaare vorhanden.

Die Momentspannung kann direkt und auch indirekt gemessen werden. Die jeweilige Momentanspannung wird nicht als Spannung gemessen, sondern sie wird anhand einer Winkelposition abgeleitet bzw. angenommen.

Die Winkelposition lässt sich z. B. mit einer Generatorscheibe messen. Die Winkelposition kann anhand der Generatorscheibe gemessen werden. Der Winkelwert wird dann in einen Spannungswert einer Momentanspannung umgerechnet. Die Berechnung kann in einer Recheneinheit der Steuerung ausgeführt werden. Aus einem Tabellenwerk ist die Spannung z. B. ermittelbar. Die Messung über eine Winkelscheibe hat den Vorteil der Berührungslosigkeit. Auch wird aufgrund der Messung die Spannung des Generators nicht verfälscht.

Eine, nicht zuletzt auch in energetischer Hinsicht günstige Betriebsweise besteht in den pulsweitenmodulierten An- und Auszeiten der Stromschalter. Die Stromschalter sind als pulsweitenmodulierte Schalter steuerbar. Die Stromschalter werden während einer ersten Zeit komplett durchgeschaltet und während einer zweiten Zeit komplett gesperrt. Es findet also keine proportionale Stromsteuerung statt, sondern, die Schalter sind entweder durchgeschaltet oder sie sind in einem gesperrten Zustand.

Die Vorrichtung hat nicht nur eine mit einer Logik ausgestattete Steuerung. Zu der Steuerung kann auch eine Treiberstufe gezählt werden. In diesem Fall, umfasst die Steuerung auch eine Treiberstufe. Die Steuerung operiert mit Frequenzen bzw. in einem Frequenzbereich, der für einen überkritischen Bereich ausgelegt ist. Als kritische Frequenz wird die Drehfrequenz des Generators betrachtet. Die Steuerung ist für Frequenzen ausgelegt, die sich in allen Betriebsweisen und -geschwindigkeiten in einem Frequenzband befindet, deren Frequenzen, d. h. die vom Frequenzband abgedeckten Frequenzen, stets ein Mehrfaches der Drehfrequenz einer Welle des Generators betragen. Der Generator kann in einem Frequenzspektrum betrieben werden. Das Frequenzspektrum weicht mit seinen Grenzfrequenzen von den Eck- bzw. Grenzfrequenzen des Frequenzbands der Steuerung ab. Selbst in einem Leerlauflangsammodus, in dem der Generator betrieben werden kann, kann die Steuerfrequenz ein Mehrfaches einer Generatordrehfrequenz betragen. Die Leerlauflangsamfrequenz kann z. B. in einer Ausgestaltung auf eine Grenzfrequenz von 1/2000 Umdrehung pro Minute gelegt werden. In einer ähnlichen Ausgestaltung kann die unterste Drehzahl auf 2500 Umdrehung pro Minute festgelegt werden.

In einer günstigen Weiterbildung der vorliegenden Erfindung kann die Vorrichtung ohne eigene Induktivitäten in dem Hochsetzsteller ausgestaltet sein. In einer ähnlich günstigen Ausgestaltung können ausschließlich Kleinstinduktivitäten in dem Hochsetzsteller platziert werden bzw. vorhanden sein. Kleinstinduktivitäten sind z. B. Induktivitäten, die im µH-Bereich oder im mH-Bereich angesiedelt sind. Grundsätzlich kann also von einem induktivitätenfreien oder einem nahezu induktivitätenfreien Hochsetzsteller ausgegangen werden. An Stelle von Induktivitäten in dem Hochsetzsteller greift die Vorrichtung auf die Generatorwicklungen als Speicherelemente für Spannungen bzw. elektrische Energie zurück. Mithilfe der Generatorwicklungen bzw. unter Nutzung von Generatorwicklungen als Speicherelemente für elektrische Energie kann in der Vorrichtung eine Spannungserhöhung vorgenommen werden.

Die Vorrichtung bietet besonders viele Vorteile, wenn der Hochsetzsteller nicht nur eine Phase, d. h. einen Spannungsverlauf, sondern mehrere Phasen, d. h. zu einander versetzt verlaufende Spannungsverläufe bietet, es also insbesondere wenigstens ein drei-phasiger Hochsetzsteller ist. In einem solchen Fall kann sogar ein Drehstrom aus dem Generator bzw. von der Vorrichtung bezogen werden.

Die Vorrichtung kann komponentenweise realisiert sein. Dem Gleichspannungszwischenkreis kann z. B. ein Sinus-Wechselrichter folgen. An den Sinus-Wechselrichter ist dann z. B. eine Last anzuschließen. Der Sinus-Wechselrichter ist als Gerät mit Anschlüssen für elektrische Verbindungen zu Verbrauchern wie elektrischen Lasten ausgestattet.

Teil der Vorrichtung ist, wie bereits oben angeklungen, die Steuerung. Die Steuerung kann z. B. mit einem Eingang ausgestattet sein. An diesem Eingang kann z. B. die Erregerspannung abgegriffen werden. Der Eingang kann z. B. als Messeingang für die Erregerspannung genutzt werden. Der Eingang dient zur Messaufnahme der Erregerspannung. Die Erregerspannung liegt an der Erregerspule des Generators an. Welche Spannung an der Erregerspule genau anliegt, lässt sich z. B. über eine Parallelschaltung zu der Erregerspule des Generators ermitteln. In parallelem Betrieb wird die Spannung messtechnisch abgegriffen.

Die Vorrichtung kann noch weitere Komponenten umfassen. Eine weitere mögliche Komponente ist z. B. ein Diodengleichrichter. Eine weitere mögliche Komponente ist z. B. ein EMV-Filter (Filter zur Herstellung einer elektromotorischen Verträglichkeit). Zwischen den Spannungssträngen des Generators auf der einen Seite und dem Hochsetzsteller auf der anderen Seite ist ein - schaltungstechnisch gesehen - günstiger Ort für eine solche weitere Komponente. An jener Stelle kann zumindest eine der weiteren Komponenten zwischengeschaltet sein. Z. B. kann ein EMV-Filter, der insbesondere Harmonische filtert, zwischen den Strängen und dem Hochsetzsteller vorhanden sein. Ein Diodengleichrichter, insbesondere ein Mehrphasen-Diodengleichrichter, kann sich schaltungstechnisch unmittelbar nach dem Strängen des Generators in der Vorrichtung befinden.

Die Steuerung wird noch besser, wenn in die Steuerung ein Überspannungsschutz und/oder eine Strangstrombegrenzung integriert sind/ist. Solche Maßnahmen steigern die Zuverlässigkeit der Steuerung und damit die Funktionalität der Steuerung.

Die zuvor dargestellten Kombinationen und Ausführungsbeispiele lassen sich auch in zahlreichen weiteren Verbindungen und Kombinationen betrachten.

So kann z. B. ein Spannungsschutz auch an den Eingängen der Steuerung vorhanden sein, sodass Überspannungen, z. B. auf der Erregerspule des Generators, keine Schädigungen an der Steuerung erzeugen können.

Als Energiespeicher eignen sich alle Komponenten, die ausreichend schnell, z. B. Super-Caps oder auch Kondensatoren, Energie speichern können.

Es kann auch gesagt werden, die vorliegende Erfindung beschäftigt sich mit der Verbesserung des Leistungsverhaltens eines Generators, der mit einem Hochsetzsteller und einer Steuerung zusammenarbeitet. Hierfür wird eine Ansteuerfrequenz der Schalter des Hochsetzstellers in Abhängigkeit einer Drehzahl des Generators und/oder der Kurvenform der durch den Generator erzeugten Spannung variiert. Der Ansteuerung liegt eine Funktion zu Grunde. Die befolgte Funktion operiert in einer Ausgestaltung mit Umschaltpunkten, an denen Änderungen in dem Abbildungsbezug zwischen Eingangsfrequenz (Drehzahl des Generators) und Ansteuerfrequenz (der Stromschalter) auftreten (wie z. B. unstetige Sprungstellen). Nach einem weiteren Aspekt operiert die Funktion in Abhängigkeit der im jeweiligen Moment anliegenden Spannung bzw. in Abhängigkeit der im jeweiligen Moment abgegebenen Spannung (Momentanspannung) einer Spule des Generators.

Es kann auch gesagt werden, dass die Art des Generators und die daraus resultierende Kurvenform der Spannung(en) des Generators, z. B. im Falle eines Klauenpolgenerators, z. B. im Falle eines Generators mit inhomogen gestalteten Luftspalten zwischen Polschuh und Stator, z. B. im Falle des elektronisch kommutierten Motors mit nicht-sinusförmiger Kurvenform, Eingang in bzw. Berücksichtigung durch eine Gruppe von Boostfaktoren findet. Der jeweilige Boostfaktor entspricht dem aktuellen Spannungswert in einem Strang, den dieser Strang zur Verfügung stellen kann bzw. der an dem jeweiligen Strang anliegt.

Eine Vorrichtung nach den zuvor beschriebenen Ausgestaltungen, selbst wenn von diesen nur ein Teil in der Vorrichtung realisiert ist, schafft die Möglichkeit eines riemengetriebenen Generators im Nebentrieb einer Verbrennungskraftmaschine. Messungen und Versuche haben ergeben, dass der Antriebsriemen des Generators Wechselmomente von weniger als 10 Nm, häufig sogar weniger als 5 Nm erfährt. Der Riementrieb kann z. B. so ausgelegt werden, dass er gerade einmal maximal 4 Nm aushalten können muss, obwohl der Energieerzeuger eine Leistung in einem Bereich von 2 kW bis 3 kW abgibt. Der Riemenantrieb kann sehr sanft, dennoch effektiv eine Verbindung zwischen Verbrennungsmotor und Generatorwelle herstellen und die Generatorwelle antreiben. Dank der fehlenden Stromsprünge, ergo der fehlenden Leistungssprünge ist eine Riementriebanbindung möglich.

Ein kontinuierlicher Leistungsfluss über einen Riementrieb sorgt für einen kontinuierlichen elektrischen Leistungsfluss.

Das Antriebsmoment ist kontinuierlich in eine elektrische Leistung umwandelbar. Das Wechselmoment liegt, insbesondere im einem äußerst geringen Maße, nur (leicht) schwellend auf dem kontinuierlich zur Verfügung stehenden Antriebsmoment.

Die zuvor dargestellten Aspekte können demzufolge in zahlreichen Varianten miteinander verschaltet und kombiniert werden.

### Figurenkurzbeschreibung

Die vorliegende Erfindung kann noch besser verstanden werden, wenn Bezug auf die beiliegenden Figuren genommen wird, die beispielhaft besonders vorteilhafte Ausgestaltungsmöglichkeiten darlegen, ohne die vorliegende Erfindung auf diese einzuschränken, wobei
Figur 1 ein erstes Ausführungsbeispiel einer Vorrichtung mit Generator zeigt,
Figur 2 ein zweites Ausführungsbeispiel einer Vorrichtung mit Generator zeigt,
Figur 3 schematisch eine erste Ausführungsform eines Hochsetzstellers zeigt, der Teil der Vorrichtung nach Figur 1 oder auch nach Figur 2 sein kann,
Figur 4 eine zweite Ausführungsform eines Hochsetzstellers in schematischer Darstellung zeigt, der Teil der Vorrichtung nach Figur 1 oder auch nach Figur 2 sein kann,
Figur 5 eine mögliche Kennlinie eines PWM-Frequenzverlaufs zeigt, die in einem Speicher einer Steuerung einer Vorrichtung nach den Figuren 1 und 2 abgelegt sein kann,
Figur 6 an einer Halbwelle das Prinzip der adaptiven Boost-Faktor-Einstellung verdeutlicht,
Figur 7 ein Boost-Kennliniefeld zeigt, das Teil einer Steuerung einer Vorrichtung nach Figur 1 oder Figur 2 sein kann,
Figur 8 eine Gegenüberstellung einer besonders vorteilhaften Ausgestaltung der Erfindung im Vergleich mit einer Steuerung unter Ausblendung der Erfindung zeigt,
Figur 9 eine vereinfachte Oszilloskop-Darstellung einer Busspannung mit nicht lückendem Strom an einer Vorrichtung zeigt, die die Erfindung realisiert hat und
Figur 10 ein weiteres Boost-Kennlinienfeld zeigt, das Teil einer Steuerung einer Vorrichtung, z. B. nach Figur 1 oder nach Figur 2 sein kann.

### Figurenbeschreibung

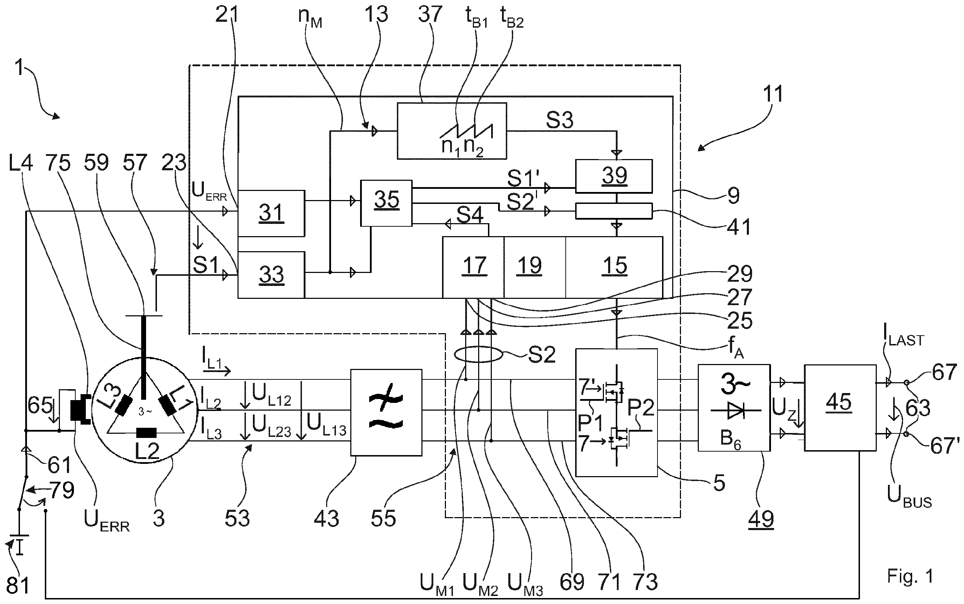

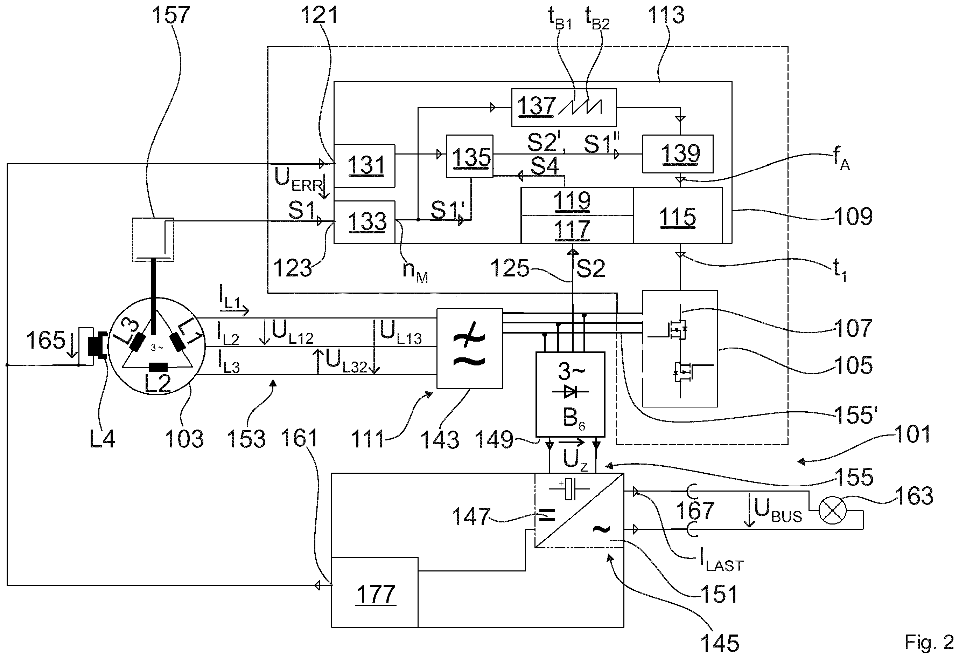

Figuren 1 und 2 zeigen mögliche Ausgestaltungen in vereinfachter Darstellung. In diesem Sinne erkennt jeder elektrotechnisch geschulte Fachmann, dass die Prinzipdarstellungen gem. den Figuren 1 und 2 häufig Null-, Massen-, Bezugs- und/oder Stromrückflussleitungen an vielen Stellen - aus Vereinfachungsgründen - weggelassen haben. Mit anderen Worten, die als Leitungen dargestellten Verbindungen zwischen einzelnen Komponenten sind - wo sinnvoll - als Leitungsbündel, denn als Einzelleitungen zu verstehen.

Figur 1 zeigt in prinzipieller Weise, d. h. in vereinfachender Weise, einen Energieerzeuger 1. Teil des Energieerzeugers 1 ist ein Generator 3, dessen Welle 75 z. B. motorisch durch eine Verbrennungskraftmaschine eines Kraftfahrzeugs angetrieben werden kann, z. B. durch einen Riemen- oder durch einen Kettentrieb als Nebenaggregat, um bedarfsgerecht eine elektrische Leistung an Anschlussklemmen wie dem Lastanschluss 67, 67^{l} zur Verfügung zu stellen, insbesondere vor Ort dem Betreiber eines Nutzfahrzeugs, wie einem Transporter oder einem Lastkraftwagen.

Der Generator 3, der in vorteilhafter Weise ein Klauengenerator sein kann, hat mehrere Wicklungen L1, L2, L3. Darüber hinaus hat der Generator 3 eine Erregerspule L4, auf die ein Feldsteuerausgang 65 über einen Versorgungsanschluss 61 aufgeschaltet ist.

An dem Versorgungsanschluss 61 wird eine Spannung zur Verfügung gestellt, die die Erregerspannung U_{ERR} ist. Als Erregerspannung U_{ERR} kann eine geeignete Energiequelle genutzt werden. Je nach Wunsch, welche Leistung der Energieerzeuger liefern können soll, stehen als Energiequellen verschiedene Quellen zur Verfügung. In dem Fall, in dem nicht die gesamte Leistung des Energieerzeugers 1 an dem Lastanschluss 67, 67^{l} zur Verfügung stehen muss, kann ein Teil der Energie in dem Gleichspannungsenergiespeicher 45 an den Versorgungsanschluss 61 und somit an den Feldsteuerausgang 65 weitergeleitet werden. In dem Fall, in dem möglichst viel Energie des Gleichspannungsenergiespeichers 45 an eine Last 63 abgebbar sein soll, kann eine Energiehilfsquelle 81 als Energiequelle für die Erregerspannung U_{ERR} genutzt werden. Als Energiehilfsquelle 81 kommt z. B. die Starterbatterie eines Nutzfahrzeuges in Frage, wenn der Energieerzeuger 1 als On-Board-Energieerzeuger in dem Nutzfahrzeug, z. B. in einem Transporter, verbaut ist. Mittels Schalter 79 steht entweder dem Energieerzeuger 1 oder einem Bediener die Wahlmöglichkeit zur Verfügung zu entscheiden, ob die Energie, die der Energieerzeuger 1 als elektrische Energie zur Verfügung stellen kann, vollständig ablieferbar ist oder zum Teil für den Generatorbetrieb des Generators 3 zu nutzen ist. Hierdurch lassen sich "letzte Leistungsreserven" wie z. B. zusätzliche 100 Watt bis 200 Watt, zumindest kurzfristig, im Betrieb des Energieerzeugers 1 aktivieren. Der Schalter 79 übernimmt in einer solchen Konstellation die Leistungsspitzenfreigabe.

Die drei Wicklungen L1, L2, L3 des Generators 3 sind über ein Leitungsbündel 53 an einen EMV-Filter 43 angeschlossen. Der EMV-Filter 43 ist eine vorgeschaltete Stufe vor der Steuerung 11. Ausgangsseitig ist an die Steuerung 11 ein Gleichspannungsenergiespeicher 45 angeschlossen. Der Gleichspannungsenergiespeicher 45 folgt einem Diodengleichrichter 49. Der Gleichspannungsenergiespeicher 45 hat einen ersten Lastanschluss 67 und einen zweiten Lastanschluss 67^{l}. Wie bereits ausgeführt, können an die Lastanschlüsse 67, 67^{l} Verbraucher angeschlossen werden, die für die Versorgung durch einen Gleichspannungsbus ausgelegt sind. Eine solche Last 63 ist in der Ausgestaltung nach Figur 1 eine Gleichspannungslast oder eine Wechselspannungslast. Wie zuvor schon angeklungen, können die einzelnen funktionellen Blöcke wie der Gleichspannungsenergiespeicher 45 und der Diodengleichrichter 49 auch miteinander in der Reihenfolge getauscht werden.

Die Steuerung 11 setzt sich aus mehreren Komponenten zusammen. Eine Komponente der Steuerung 11 ist das Steuergerät 9, das wiederum Baugruppen, Komponenten und Teile umfasst, wie die Berechnungseinheit 13. Zu der Steuerung 11 gehört auch der Hochsetzsteller 5. Der Hochsetzsteller 5 umfasst mehrere Stromschalter 7, 7^{l}.

Das Steuergerät 9 nutzt seine Berechnungseinheit 13, um über die Treiberstufe 15 Steuerungssignale an den Hochsetzsteller 5, genauer an die Stromschalter 7, 7^{l} weiterleiten zu können.

Das erste Leitungsbündel 53, das von dem Generator 3 über den EMV-Filter 43 auf das zweite Leitungsbündel 55 führt, um in den Hochsetzsteller 5 zu münden, ist eine busartige Verbindung zwischen dem Generator 3 und den nachgeschalteten Komponenten wie dem EMV-Filter 43. Daher gehören mehrere Leitungen 69, 71, 73 zu dem Leitungsbündel 53 bzw. 55. Stichleitungsartig sind einzelne Leitungen wie die Leitungen 69, 71, 73 auf Messeingänge 25, 27, 29 des Steuergeräts 9 geführt.

Weitere Messeingänge 21, 23 bietet das Steuergerät 9. Das Steuergerät 9 hat einen ersten Messeingang 21, der ein Spannungseingang ist. Das Steuergerät 9 hat einen zweiten Messeingang 23, der ein Triggereingang ist. Das Steuergerät 9 hat weitere Messeingänge 25, 27, 29, die wahlweise als Spannungseingänge und/oder als Stromeingänge für die elektronische Schaltung des Steuergeräts 9 verwendet werden können.

Der Versorgungsanschluss 61 ist auf den ersten Messeingang 21 geführt. Ein Signalgeber 57, der Signale einer Generatorscheibe 59 aufnehmen und übermitteln kann, ist auf den Triggereingang 23 geführt. Zwischen den Leitungen 69, 71, 73 und dem Steuergerät 9 bestehen Verbindungen durch die Messeingänge 25, 27, 29.

Zu dem ersten Messeingang 21, der ein Spannungseingang ist, gehört ein Analog-Digital-Converter (ADC) 31. In dem Steuergerät 9 ist hinter dem zweiten Messeingang 23 eine Triggerfilterstufe 33 vorhanden. Der dritte Messeingang 25, der vierte Messeingang 27 und der fünfte Messeingang 29 sind auf eine Stufe geführt, die ein Überspannungsschutz 17 und eine Strangstrombegrenzung 19 umfasst. Signale von den diversen Messeingängen 21, 23, 25, 27, 29 werden, ggf. aufbereitet wie das Signal für eine Rechengröße zur Momentanspannung S4, auf die Recheneinheit 35 geführt.

Die Recheneinheit 35 ist eine Prozessoreinheit, die mit Speichern ausgestattet bzw. mit Speichern kommunizierend mit Werten aus Umrechnungstabellen, wie der Umrechnungstabelle 37 für Generatorfrequenzen und Ansteuerfrequenzen, operieren kann. Zu der Berechnungseinheit 13 mit der Recheneinheit 35 gehört auch ein Speicher 39 mit einem Boostfaktor-Kennfeld. Die Berechnungseinheit 13 hat eine L-Faktor-Berechnungsstufe 41.

Mithilfe der L-Faktor-Berechnungsstufe 41 kann die Erregerspannung U_{ERR} an den Lastfall angepasst werden, d. h. an die Last 63, die an dem Lastanschluss 67, 67^{l} angeschlossen ist. Z. B. kann der Energieerzeuger 1 für eine Erregerspannung U_{ERR} von 10 Volt als typischen Wert dieser Schaltung ausgelegt werden. Wird eine zu große Last angeschlossen bzw. ein zu großer Laststrom I_{Last} gezogen, so können die Schaltzeiten bzw. die Ansteuerpunkte P1 und P2 der Schalter 7, 7^{l} angepasst werden, sodass aus dem Gleichspannungsenergiespeicher 45 eine Spannung an dem Versorgungsanschluss 61 zur Verfügung steht. In einem solchen Fall wird die Erregerspannung U_{ERR} z. B. auf 11 Volt statt der üblicherweise 10 Volt erhöht.

Die Figur 1 zeigt von dem Steuergerät 9 in rechenlogischer Reihenfolge den Berechnungsablauf der Recheneinheit 35, die mittels Umrechnungstabelle 37 auf ein Boostfaktor-Kennfeld 39 zurückgreifen kann, um über eine L-Faktor-Berechnungsstufe 41 Steuersignale an die Treiberstufe 15 zu schicken.

Der Energieerzeuger 1 soll an dem Lastanschluss 67, 67^{l} eine gewünschte Busspannung U_{Bus} mit einem Laststrom I_{Last} als Gleichspannungsversorgungsquelle zur Verfügung stellen. Folglich liefert der Diodengleichrichter 49 den Strom I_{Last} unter der Busspannung U_{Bus}. Der Diodengleichrichter 49 ist ein dreiphasen-, sechs Dioden umfassender Brückengleichrichter. Die elektrische Energie wird in einem Gleichspannungsenergiespeicher 45 zwischengespeichert, der energetisch vor oder nach dem Diodengleichrichter 49 (wie in Figur 1 dargestellt), aber auch energieflussmäßig dem Diodengleichrichter 49 parallel geschaltet sein kann. Aus diesem Grund wird mit einer Zwischenspannung Uz gearbeitet.

Der Generator 3, der, wie in Figur 1 dargestellt, drei Wicklungen L1, L2, L3 hat, liefert über sein Leitungsbündel 53 verschiedene Strangspannungen U_{L12}, U_{L23}, U_{L13}. Durch die Strangspannungen U_{L12}, U_{L23}, U_{L13} werden Strangströme I_{L1}, I_{L2}, I_{L3} in den EMV-Filter 43 geschickt, der höherfrequente Signalanteile auf den Strangspannungen U_{L12}, U_{L23}, U_{L13} herausfiltern kann. Die Spannungen U_{L12}, U_{L23}, U_{L13} mit ihren elektrischen Strömen I_{L1}, I_{L2}, I_{L3} gelangen an den induktivitätsfreien Hochsetzsteller 5. Der Hochsetzsteller 5 nutzt die Wicklungen L1, L2, L3 des Generators 3, um in Abhängigkeit der Ansteuerfrequenz f_{A} durch Ansteuerpunkte P1, P2 die Stromschalter 7, 7^{l} so zu schalten, um an den Gleichspannungsenergiespeicher 45 bedarfs- bzw. zustandsweise erhöhte Spannungen im Vergleich zu den momentanen Werten der Strangspannungen U_{L12}, U_{L23}, U_{L13} durchzuschalten. Dazu variiert das Steuergerät 9 die Ansteuerfrequenz f_{A}. Die Erregerspannung U_{ERR} ist auf den ersten Messeingang 21 geführt, der durch den Analog-Digital-Converter mit der Recheneinheit 35 verbunden ist. Dadurch wird der aktuelle Wert der Erregerspannung U_{ERR} auf der Erregerspule L4 permanent durch die Recheneinheit 35 überwacht. Die Recheneinheit 35 erhält ein Signal der Drehzahl S1 der Welle 75 des Generators 3. Dank der Triggerfilterstufe 33 steht in dem Steuergerät 9 die Momentandrehzahl n_{M} des Generators 3 verschiedenen Modulen bzw. Komponenten der Berechnungseinheit 13 zur Verfügung, so z. B. (wie bereits gesagt) der Recheneinheit 35. In Abhängigkeit von der Momentandrehzahl n_{M} des Generators 3 wird ein dazugehöriger Umrechnungswert aus der Umrechnungstabelle 37 für die Ansteuerfrequenz ermittelt. Die Umrechnungstabelle 37 entspricht einer stückweise stetigen Funktion, die an Umschaltpunkten t_{B1}, t_{B2}, d. h. zu bestimmten Drehzahlen n1, n2 Unstetigkeitsstellen aufweist. Das aus der Umrechnungstabelle 37 ausgelesene Signal, z. B. für das Winkelmaß oder auch für ein Signal wie die PWM-Frequenz S3, wird auf das Boostfaktor-Kennfeld 39 geführt. Der Wert, der von dem Boostfaktor-Kennfeld 39 zurückgegeben wird, hängt von dem Signal für das Winkelmaß und/oder der PWM-Frequenz S3 und von dem Signal für die Drehzahl S1^{l} ab. Das Signal für die Drehzahl S1^{l} basiert auf dem Signal der Drehzahl S1 von der Welle 75 des Generators 3, ist jedoch durch die Recheneinheit 35 aufbereitet. Ein Signal S2, das den gezogenen Strom anzeigt, steht ebenfalls der Recheneinheit 35 zur Verfügung. Aufbereitet durch die Recheneinheit 35 wird das Signal des gezogenen Stroms S2 als Signal der Last S2^{l} der L-Faktor-Berechnungsstufe 41 zur Verfügung gestellt.

Nach diesen Berechnungsschritten erfolgt die Ansteuerung des Hochsetzstellers 5 durch die Treiberstufe 15 mit einer auf die Momentandrehzahl n_{M} abgestimmte Ansteuerfrequenz f_{A}. Durch die Schutz- und Sicherungsmaßnahmen, von denen in außergewöhnlichen, insbesondere gefährdenden Situationen zumindest der Überspannungsschutz 17 oder die Strangstrombegrenzung 19 ansprechen, kann die Treiberstufe 15 vor einer den Hochsetzsteller 5 gefährdenden Ansteuerung geschützt werden. Hierzu werden die Momentanspannungen U_{M1,} U_{M2}, U_{M3} den Messeingängen 25, 27, 29 des Steuergeräts 9 zur Verfügung gestellt. Die Momentanspannungen U_{M1,} U_{M2}, U_{M3} stehen sowohl der Recheneinheit 35 für ihre Berechnungen und für ihre Signalbildungen S1^{l}, S2^{l}, S3, S4 als auch den Berechnungen des Überspannungsschutzes 17 zur Verfügung. Der Überspannungsschutz 17 ist eine autark operierende, von den Berechnungen der Recheneinheit 35 unabhängige Einheit, sodass Schutzmaßnahmen die Ansteuervorgaben aus den Berechnungen überschreiben bzw. dominieren können.

Die Reicheneinheit 35 berechnet die Zeitpunkte für die Durchschaltzeiten und Sperrzeiten der Stromschalter 7, 7^{l} u. a. durch
1. eine Ermittlung einer Frequenz in einem Frequenzbereich f_{B} und
2. einen Satz Boostfaktoren B1, B2, B3, B4, B5, B6 oder B1^{l}, B2^{l}, B3^{l}, B4^{l}, B5^{l}, B6^{l}, B7^{l}.

Die Vorrichtung nach Figur 1 macht es möglich, dass Durchschaltzeiten und Sperrzeiten der einzelnen Stromschalter 7, 7^{l} des Hochsetzstellers 5 bedarfsabhängig angepasst werden können. Hierzu wird u. a. die Drehzahl durch das Signal der Drehzahl S1 der Welle 75 des Generators 3 berücksichtigt. Auch wird mit Boostfaktoren eines Boostfaktor-Kennfelds 39 operiert.

Die Durchschaltzeiten und die Sperrzeiten werden des Weiteren durch die Last und insbesondere mittels Erregerspannung U_{ERR} beeinflusst.

Figur 2 zeigt einen Energieerzeuger 101 in schematischer, vereinfachter Darstellung. Komponente, Gegenstände und Abläufe, die den Komponenten, den Gegenständen und den Abläufen des Energieerzeugers 1 nach Figur 1 entsprechen, sind mit um 100 erhöhten Bezugszeichen versehen worden. Hierdurch wird auch die Austauschbarkeit der einzelnen Gruppen und Baugruppen zwischen den Ausführungsbeispielen unterstrichen.

Der Energieerzeuger 101 nach Figur 2 ist ähnlich zu dem Energieerzeuger 1 nach Figur 1 aufgebaut. Der Energieerzeuger 101 nach Figur 2 umfasst einen Gleichspannungsenergiespeicher 145 mit einem Gleichspannungszwischenkreis 147, aus dem ein Sinus-Wechselrichter 151 versorgt werden kann, damit an dem Lastanschluss 167 eine Busspannung U_{BUS} als Wechselspannung der Last 163 zur Verfügung gestellt werden kann. Mit anderen Worten, an dem Lastanschluss 167 liegt eine Wechselspannung als Busspannung U_{BUS} mit einem Laststrom I_{LAST} zur Versorgung der Last 163 an.

Der Gleichspannungszwischenkreis 147 dient darüber hinaus zur Versorgung des Versorgungsanschlusses 161, der die Spannungsversorgung für den Feldsteuerausgang 165 zur Verfügung stellt. An dem Feldsteuerausgang 165 ist die Erregerspule L4 des Generators 103 angeschlossen. Die Spannung des Versorgungsanschlusses 161 wird über den ersten Messeingang 121, der ein Spannungseingang der Berechnungseinheit 113 ist, der Steuerung 111 zur Gegenprüfung der geschlossenen Regelschleife, zur Verfügung gestellt. Somit kann die Erregerspannung U_{ERR} permanent von einer Recheneinheit 135, die Teil des Steuergeräts 109 ist, gegengerechnet und überprüft werden. Ein zweiter Messeingang 123 ist ein Triggereingang. Der zweite Messeingang 123 wird informationell von dem Signalgeber 157 mit einem Signal der Drehzahl S1 des Generators 103 versorgt. Somit kennt die Berechnungseinheit die Momentandrehzahl n_{M} des Generators 103. Der Energieerzeuger 101 hat ein Leitungsbündel 153, 155, 155^{l}, um mehrere Phasen von dem Generator 103 bis zu den Gleichspannungskomponenten des Energieerzeugers 101, wie dem Gleichspannungszwischenkreis 147, weiterleiten zu können. Auf dem zweiten Leitungsbündel 155 und an dem Versorgungsanschluss 161 liegt eine Gleichspannung an, sodass an jenen Stellen der Leitungsumfang reduziert im Vergleich zu dem ersten Leitungsbündel 153 ist (weniger Adern).

Der exakte Wert der Erregerspannung U_{ERR} an dem Versorgungsanschluss 161 in Abhängigkeit z. B. einer L-Faktorberechnung (siehe auch Figur 1) kann durch die Erregerspannungsregelung 177 in einem Spannungsband variiert und bedarfsabhängig eingestellt werden. Stellt der Gleichspannungsenergiespeicher 145 zu große Lastabflüsse fest, kann die Erregerspannungsregelung 177 ggf. die Erregerspannung U_{ERR} kontinuierlich bis zu einem Maximalwert, z. B. 12 Volt anstatt ursprünglicher 10 Volt, anheben.

Zum Energieerzeuger 101 gehört der Hochsetzsteller 105. Teile des Hochsetzstellers 105 sind dessen Stromschalter 107. Der Hochsetzsteller 105 wird durch die Treiberstufe 115 angesteuert. Eingriffe in die reguläre Funktion der Treiberstufe 115 können ein Überspannungsschutz 117 und eine Strangstrombegrenzung 119 vornehmen. Haben weder Überspannungsschutz 117 noch Strangstrombegrenzung 119 angesprochen, operiert der Hochsetzsteller 105 gemäß seiner Ansteuerung durch die Treiberstufe 115 in Übereinstimmung mit den Berechnungen der Berechnungseinheit 113 mit ihrer Recheneinheit 135.

Die Recheneinheit 135 sammelt diverse Signale ein. Von außen auf das Steuergerät 109 geführte Signale wie das Signal der Drehzahl S1 oder die der Erregerspannung U_{ERR} werden über Umwandlungs- und/oder Anpassungsstufen wie den Analog-Digital-Converter 131 oder die Triggerfilterstufe 133 geführt. Innerhalb der Berechnungseinheit 113 stehen Signale wie das (aufbereite) Signal S1^{l} der Drehzahl der Welle des Generators 103, das (aufbereitete) Signal des gezogenen Stroms S2^{l} und des Signals für die Rechengröße zur Momentanspannung S4 zur Verfügung.

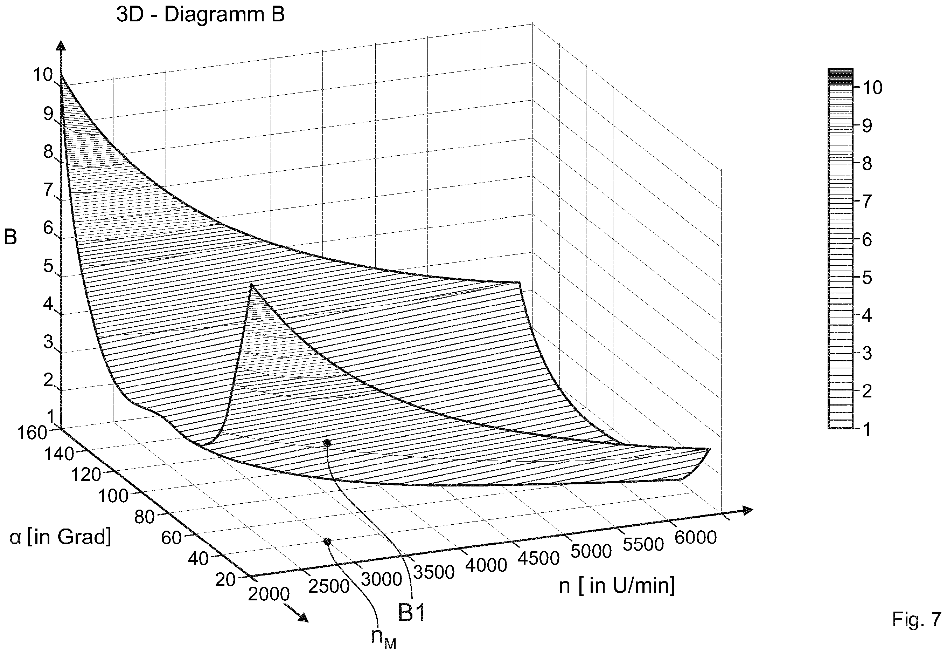

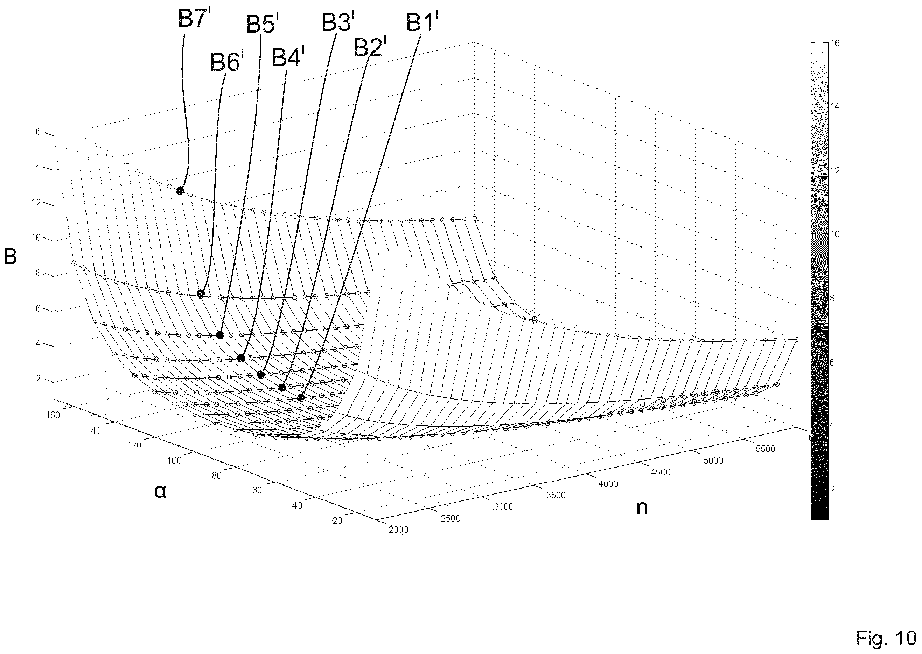

In Abhängigkeit des tatsächlich in dem Steuergerät 9, 109 eingespielten Boostfaktor-Kennfelds 139, können einzelne Boostfaktoren wie der Boostfaktor B1 (siehe Figur 7) oder wie der Boostfaktor B6^{l} (siehe Figur 10) aus dem Boostfaktor-Kennfeld 139 durch Festlegung eines Sets mit mehreren Variablen wie den Variablen für den gezogenen Strom S2^{l} und/oder eines Sets S1^{ll} umfassend eine aktuelle Drehzahl n_{M} des Generators wie dem Generator 3 (siehe Figur 1) oder dem Generator 103 (siehe Figur 2) und umfassend ein Winkelmaß α ermittelt werden.

Die Recheneinheit 135 operiert mit Werten aus einem Speicher (mit Werten einer Umrechnungstabelle 137) für eine Gegenüberstellung der Generatorfrequenz zur Ansteuerfrequenz des Hochsetzstellers 105 durch die Treiberstufe 115. In die Ansteuerfrequenz f_{A} geht eine Berechnung aufgrund eines Boostfaktor-Kennfelds 139 ein. Störende Signalanteile und überkritische Frequenzen werden durch einen EMV-Filter 143 von der Ausbreitung jenseits des Leitungsbündels 153 gehindert. Signale für einen dritten Messeingang 125 des Steuergeräts 109 werden dank des EMV-Filters 143 befreit von Störanteilen zur Verfügung gestellt. Dadurch können eine Stufe zur Feststellung einer Überspannung (Überspannungsschutz 117) und eine Berechnungsstufe zur Begrenzung eines Strangstroms (Strangstrombegrenzung 119) zuverlässig ermitteln, ob eine Steuerung durch die Treiberstufe 115 des Hochsetzstellers 105 zu sperren ist. Überspannungsschutz 117 und Strangstrombegrenzung 119 haben somit Vorrang vor einem Durchschalten der Ansteuerfrequenz f_{A} aus dem Ergebnis der Berechnung mithilfe des Boostfaktor-Kennfelds 139. Die Treiberstufe 115 kann im abgeriegelten Zustand aufgrund eines Ansprechens des Überspannungsschutzes 117 oder der Strangstrombegrenzung 119 keine Durchschaltzeit t₁ auf den Hochsetzsteller 105, genauer die Stromschalter 107 geben. Im regulären Betrieb wird die Durchschaltzeit t₁, d. h. wenn kein Überspannungsschutz 117 und keine Strangstrombegrenzung 119 angesprochen haben, auf die Stromschalter 107 des Hochsetzstellers 105 gegeben.

Die für die Last 163 bestimmte Energie wird von dem Diodengleichrichter 149 zur Verfügung gestellt. Der Diodengleichrichter 149 kann eine Zwischenspannung Uz dem Gleichspannungszwischenkreis 147 zur Verfügung stellen. Der Energiefluss aus dem Diodengleichrichter 149 wird durch das Schalten der Stromschalter 107 des Hochsetzstellers 105 beeinflusst. Über den Versorgungsanschluss 161 der Spannungsversorgung der Erregerspule L4 werden die induzierten Spannungen in die Wicklungen L1, L2, L3 des Generators 103 beeinflusst. Mithilfe der Erregerspannung U_{ERR} in der Erregerspule L4 lässt sich die Strangspannung wie die Strangspannung U_{L12} variieren. Auch können die weiteren Strangspannungen U_{L13}, U_{L32} dank der Ansteuerungsmöglichkeit der Erregerspule L4 mit veränderlichen Spannungen am Versorgungsanschluss 161 eingestellt werden. Hierdurch werden die Strangströme I_{L1}, I_{L2}, I_{L3} verändert. Die Strangströme I_{L1}, I_{L2}, I_{L3} fließen über den EMV-Filter 143 zum Diodengleichrichter 149. Ein weiterer Ansatz zur Beeinflussung des Stromverlaufes des Laststroms I_{LAST} erfolgt durch die Werte im Speicher 137 zur Gegenüberstellung der Generatorfrequenz zur Ansteuerfrequenz mit den Umschaltpunkten t_{B1}, t_{B2}, zu denen unstetige Sprünge gegeben sind. Zudem kann das Signal S2 des gezogenen Stroms berücksichtigt werden.

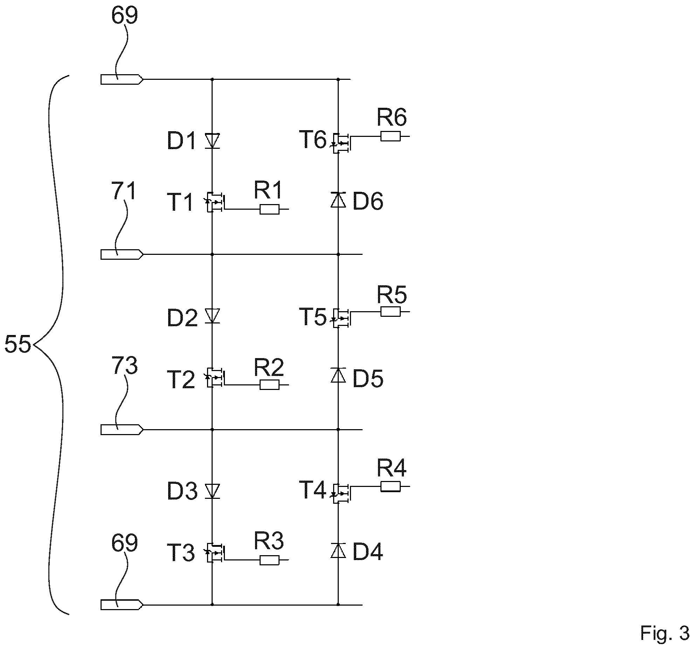

Figur 3 zeigt mit elektronischen Symbolen ausführlicher, d. h. mehr im Detail eine mögliche Schaltungsvariante für einen Hochsetzsteller 5, 105 (nach Figur 1 oder 2), der an den Leitungen 69, 71, 73 eines Leitungsbündels wie dem Leitungsbündel 55 angeschlossen werden kann. Das jeweilige Gate der Schalter T1, T2, T3, T4, T5, T6, die N-Kanal-MOS-Fet(s) sind, sind durch Vorsteuerwiderstände R1, R2, R3, R4, R5, R6 strombegrenzt. Eine Stromflussrichtung ist durch die Dioden D1, D2, D3, D4, D5, D6 freigegeben. Im Sperrrichtung unterbrechen die Dioden D1, D2, D3, D4, D5, D6 den Stromschluss von einer ersten Leitung 69, 71, 73 zu einer zweiten Leitung 71, 73, 69. Der Stromfluss durch die Dioden D1, D2, D3, D4, D5, D6 lässt sich durch die Schalter T1, T2, T3, T4, T5, T6 steuern. Zwischen jeweils zwei Leitungen 69, 71, 73 sind in antiparalleler Schaltung identische Baugruppe, bestehend aus einer Diode D1, D6, einem Schalter T1, T6 und einem Vorsteuerwiderstand R1, R6 angeordnet, damit in beide Stromflussrichtungen (von der ersten Leitung 69 auf die zweite Leitung 71 und von der zweiten Leitung 71 auf die erste Leitung 69) wahlweise ein Stromschluss eingestellt werden kann. Eine solche Schaltung, wie in Figur 3 gezeigt, wird bevorzugt bei größeren Leistungen, z. B. bei Leistungen im Bereich von 2 kW bis 6 kW, oder sogar 10 kW, verwendet.

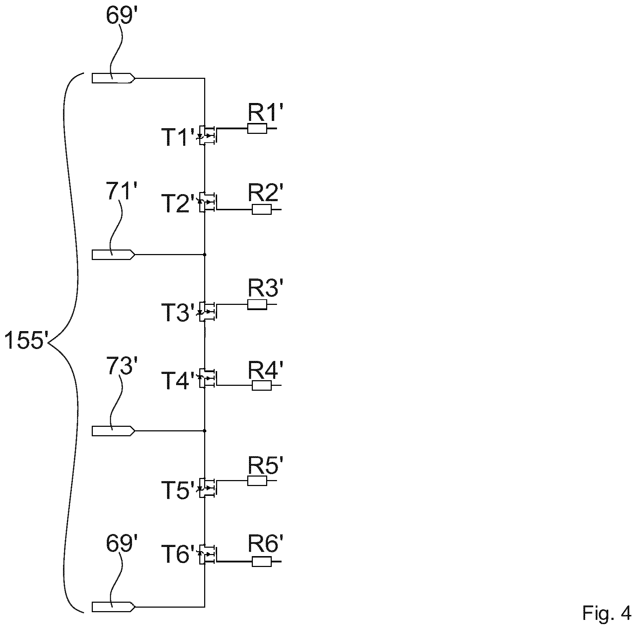

Für Energieerzeuger 1, 101 mit einer geringeren Leistungsklasse, z. B. weniger als 2 kW, kann eine vereinfachte Schaltung eines Hochsetzstellers 5, 105 gemäß Figur 4 zwischen den Leitungen 69^{l}, 71^{l}, 73^{l} eines Leitungsbündels 155^{l} (anstelle des Leitungsbündels 155) als Alternative zu der Schaltung nach Figur 3 angeordnet werden. Eine Schaltung nach Figur 4 spart sich die Verwendung von Leitungsdioden wie den Dioden D1, D2, D3, D4, D5, D6 nach Figur 3. Es sind sechs Schalter T1^{l}, T2^{l}, T3^{l}, T4^{l}, T5^{l}, T6^{l}, jeweils mit einem Vorsteuerwiderstand R1^{l}, R2^{l}, R3^{l}, R4^{l}, R5^{l}, R6^{l}, in jeweils antiparalleler Schaltungsvariante zu zwei Schaltern, und somit in Serie, angeordnet. Die Stromflusssteuerung erfolgt über die jeweils integrierte Diode in den N-Kanal-MOS-Fets jener Schalter T1^{l}, T2^{l}, T3^{l}, T4^{l}, T5^{l}, T6^{l}, die nicht angesteuert sind.

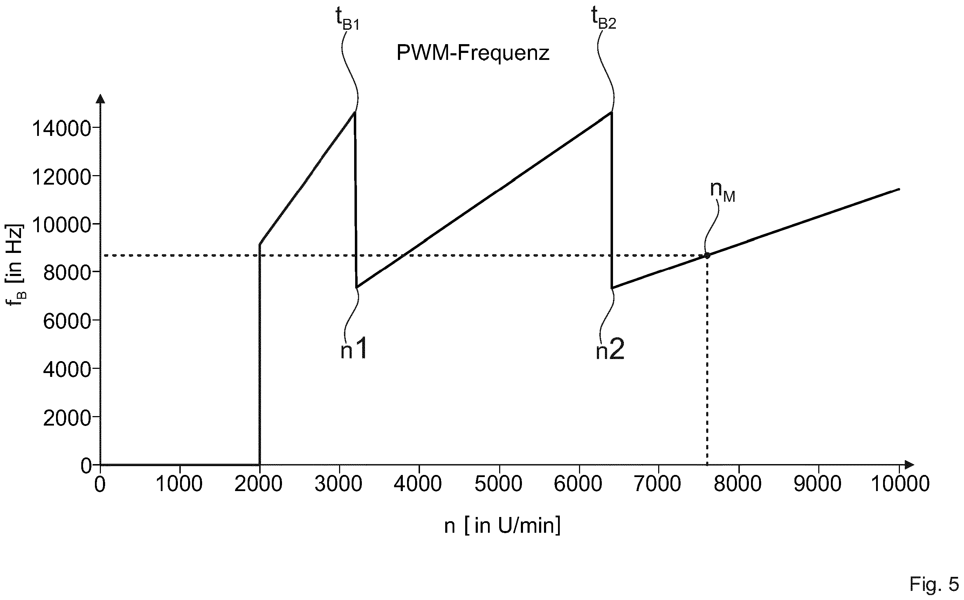

Figur 5 verdeutlicht einen Verlauf einer Kennlinie, die in einer Umrechnungstabelle 37, 137 (s. Figuren 1 und 2) mit Umschaltpunkten t_{B1}, t_{B2} in Abhängigkeit einer Drehzahl n abgelegt sein kann. Die Umrechnungstabelle 37, 137 liefert eine Ansteuerfrequenz f_{A} in Abhängigkeit einer Drehzahl n. Die Umrechnungstabelle 37, 137 soll dazu verwendet werden, anhand der Momentandrehzahl n_{M} eine konkrete Ansteuerfrequenz f_{A} zu ermitteln. Bis zu einer ersten Drehzahl n1 bietet die Umrechnungstabelle 137 einen ersten stetigen Bereich. Bei der ersten Drehzahl n1 beginnt ein neuer stetiger Bereich, der bis zu einer zweiten Drehzahl n2 reicht. Die Umschaltpunkte t_{B1}, t_{B2} liegen jeweils bei den Drehzahlen n1, n2. Die Kennlinie gemäß der Umrechnungstabelle 37, 137 hat wenigstens zwei Unstetigkeitsstellen. Die Kennlinie gemäß der Umrechnungstabelle 37, 137 hat einen ersten Bereich, z. B. bis 2000 Umdrehungen pro Minute, zu dem noch keine Ansteuerfrequenz f_{A} vorgesehen ist. Im untersten Drehzahlbereich ist die Ansteuerfrequenz f_{A} auf 0 gesetzt. Bei einer Grenzdrehzahl fängt die stetig zunehmende Ansteuerfrequenz f_{A} an. Die Ansteuerfrequenz f_{A} steigt kontinuierlich an bis zu dem Umschaltpunkt t_{B1}. Zu dieser ersten Drehzahl n1 findet eine Reduktion der Ansteuerfrequenz f_{A} am Umschaltpunkt t_{B1} statt. Die Ansteuerfrequenz f_{A} ist immer höher als die Frequenz, die der Drehzahl n entspricht. Die Momentandrehzahl n_{M} des Generators 3, 103 ist die Eingangsgröße. Der Kennlinienverlauf bestimmt sich durch die Drehzahlen n1, n2 und den dort liegenden Sprüngen in der Kennlinie. Der Frequenzbereich f_{B}, der zur Verfügung steht bzw. der ausgenutzt werden kann, deckt einen Bereich ab, der oberhalb der maximalen Frequenz liegt, die sich aus den möglichen Drehzahlen n des Generators 3, 103 ergibt. Z. B. kann die Umrechnungstabelle 37, 137 so gestaltet werden, dass die Ansteuerfrequenz f_{A} in einem ersten Bereich 32-fach so hoch ist wie die aus der Drehzahl n sich ergebende Frequenz. In einem zweiten, an den ersten Bereich sich anschließenden Bereich kann die Ansteuerfrequenz f_{A} z. B. das 16-fache der Frequenz gem. der Drehzahl n betragen. In einem weiteren Bereich kann das Zig-fache nur noch das 8-fache betragen. Die Reduktion der Frequenz mit steigender Drehzahl n trägt dazu bei, dass die Schaltverluste der Stromschalter 7, 7^{l}, 107 verringert werden. Die Sprungstellen in der Umrechnungstabelle 37, 137 beeinflussen die Schaltfrequenz bzw. Ansteuerfrequenz f_{A}, sie sind aber keine Unstetigkeitsstellen im Leistungsfluss.

Die Ansteuerfrequenz f_{A} ist vorteilhafterweise immer höher als die Frequenz, die sich aus der Drehzahl n der Welle 75 des Generators 3 ergibt. Es ist vorrangig eine Auslegungsfrage, welche Grundfrequenz für die Ansteuerfrequenz f_{A} bei der niedrigsten, zu erwartenden Frequenz der Strangspannung U_{L12} bzw. U_{L13} des Generators 3 als Ausgangspunkt bzw. Ausgangsfrequenz festgelegt ist. Bei jeder Unstetigkeitsstelle (d. h. bei den Umschaltpunkten t_{B1}, t_{B2}) wird die Ansteuerfrequenz f_{A} durch einen Faktor verringert. Ein günstiger Faktor ist der Faktor 2. Von dem ersten Bereich auf den zweiten Bereich, genauer links approximiert an die (erste) Unstetigkeitsstelle im Vergleich mit rechts approximiert an die (erste) Unstetigkeitsstelle, wird somit die Ansteuerfrequenz f_{A} halbiert. Im Übergang von dem zweiten Bereich der Ansteuerfrequenzen zu dem dritten Bereich findet ebenfalls eine Faktorbildung statt, wie z. B. eine Halbierung. Andere günstige Faktoren sind Faktoren wie 1.5, 2.5, 3 oder auch 4. Wird durch den Generator 3 ein breiter Drehzahlbereich abgedeckt, sind eher höhere Faktoren an den Sprungstellen, an den Unstetigkeitsstellen zu wählen. Wird durch den Generator 3 ein kleiner Drehzahlbereich abgedeckt, so reicht es aus, wenn z. B. mit Faktoren im Bereich von 1.1 bis 1.5 operiert wird für die Anpassung der Ansteuerfrequenz zwischen vor und nach der Unstetigkeitsstelle. Auf das oben stehende Beispiel übertragen, fängt die Ansteuerfrequenz f_{A} mit einem 32-fachen der Frequenz der Strangspannung U_{L12} bzw. U_{L13} an. Die Ansteuerfrequenz f_{A} wird, wenn sie sich im zweiten Bereich befindet, auf das 16-fache eingestellt. Im dritten Bereich bewegt sich die Ansteuerfrequenz f_{A} im 8-fachen. Wird statt dessen der Faktor 4 gewählt, so bewegt sich die Ansteuerfrequenz f_{A} je nach Frequenzbereich der Strangspannung U_{L12} bzw. U_{L13} bei einem Ausgangsfaktor von 32 im 32-fachen, im 8-fachen und im 2-fachen.

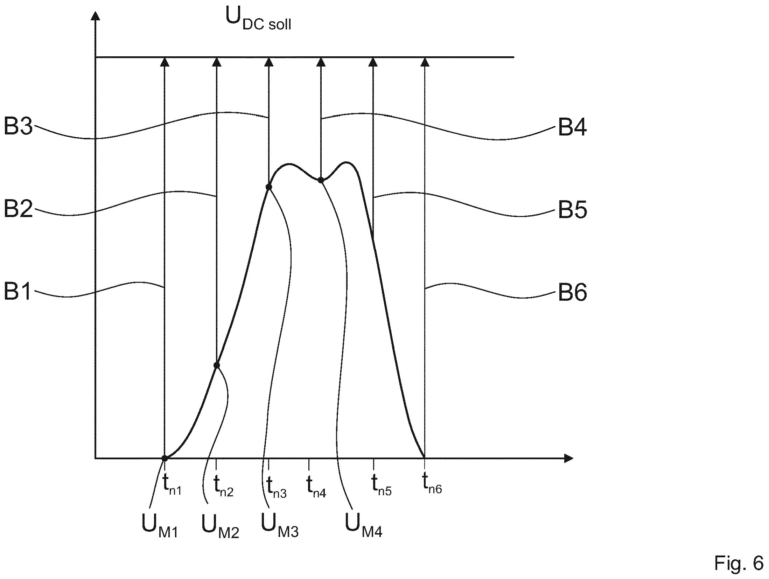

Wie aus den Figuren 1 und 2 zu entnehmen ist, operiert das Steuergerät 9, 109 mit einem Boostfaktor-Kennfeld 39, 139. Hierzu wird in Abhängigkeit der Momentanspannung U_{M1,} U_{M2}, U_{M3}, U_{M4} (s. Figur 6) ein jeweils angepasster Boostfaktor B1, B2, B3, B4, B5, B6 ermittelt, der befolgt werden sollte, um die Gleichspannungssollspannung U_{DC_{SOLL}} zu erreichen. Die Momentanspannungen U_{M1,} U_{M2}, U_{M3}, U_{M4} (s. Figur 6) werden zu Zeitpunkten tₙ₁, tₙ₂, tₙ₃, tₙ₄, tₙ₅, tₙ₆ ermittelt. Zu den einzelnen Zeitpunkten tₙ₁, tₙ₂, tₙ₃, tₙ₄, tₙ₅, tₙ₆ können die jeweiligen Boostfaktoren B1, B2, B3, B4, B5, B6 zugeordnet werden (z. B. mittels 3-D-Kennlinie nach Figur 7 oder nach Figur 10). Alternativ oder zusätzlich kann der jeweilige, für die Ansteuerung der Stromschalter 7, 7^{l}, 107 benötigte Boostfaktor B, z. B. durch eine Zwei-, Drei- oder Viervariablenfunktion, berechnet werden.

Ein geschultes Auge erkennt anhand der Kurvenform, die in Figur 6 dargestellt ist, dass es sich um einen Klauenpolgenerator als Generator 3 in dem Ausführungsbeispiel handelt.

Durch den Boostfaktor B findet eine permanente Anhebung der Strangspannung wie der Strangspannung U_{L12} bzw. U_{L13} auf U_{DC_{SOLL}} statt. Auch im Scheitel der Strangspannung, wie der Strangspannung U_{L12} bzw. U_{L13}, findet eine Spannungsanhebung in Richtung auf U_{DC_{SOLL}} statt. Im Scheitel hat der momentane Boostfaktor wie z. B. der Boostfaktor B3 oder der Boostfaktor B4 den geringsten Wert (im Vergleich mit den gleichfrequenten, übrigen Boostfaktoren).

Wird die Figur 6 auf ein Diagramm in Abhängigkeit der Drehzahl n und des Winkelmaßes α übertragen, so ergibt sich ein Drei-D-Diagramm des Boostfaktors B gemäß Figur 7. Beispielhaft ist eine Momentandrehzahl n_{M} bei 3000 Umdrehungen pro Minute eingetragen. Liegt das Winkelmaß α im Messzeitpunkt bei 40°, so ergibt sich ein Boostfaktor B1 zu jenem Zeitpunkt von ca. fünf (5).

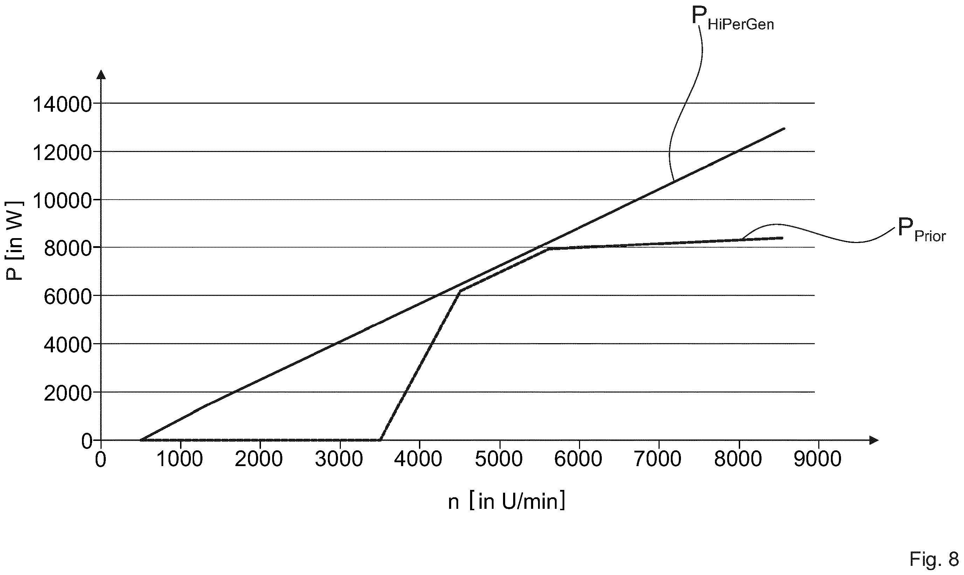

Figur 8 verdeutlicht recht anschaulich das lineare Verhältnis bei der Leistungserzeugung P gemäß der Leistungskennlinie P_{HiPerGen} über dem abgedeckten Drehzahlbereich von einer ersten Drehzahl wie 1500 Umdrehungen pro Minute bis zu einer zweiten Drehzahl wie 9000 Umdrehungen pro Minute. Zur leichteren Orientierung ist eine Leistungskennlinie P_{Prior} skizziert, die mit einem Hochsetzsteller realisierbar ist, wenn die besonderen Aspekte der Erfindung nicht in dem Steuergerät realisiert werden bzw. die besonderen Effekte bzw. die besonderen Aspekte gem. vorliegender Erfindung abgeschaltet werden.

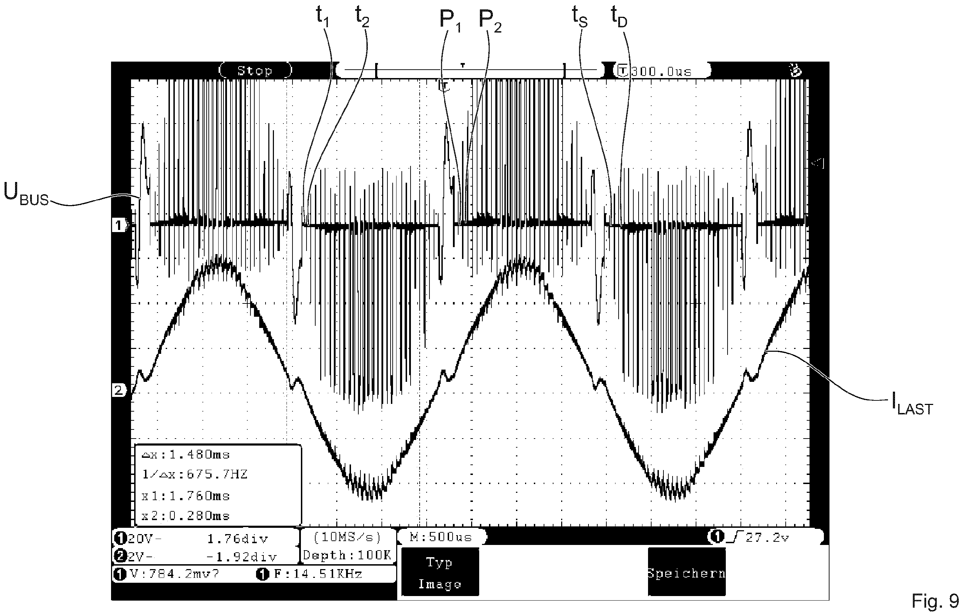

Die besonderen Vorteile der vorliegenden Erfindung erschließen sich einem Fachmann auch aus der Aufnahme eines Oszilloskops, das in Figur 9 dargestellt ist. In Figur 9 ist zu sehen, dass der Laststrom I_{Last} als nicht lückender Laststrom bezeichnet werden kann. Hierzu ist die Busspannung U_{Bus} aufgetragen. Die Spannung U_{Bus} wird zu Durchschaltzeiten t₁, t₂ in Abhängigkeit der Ansteuerfrequenz f_{A} (s. Figuren 1, 2) durchgeschaltet. Hierfür werden Ansteuerpunkte P1, P2 für die Schalter des Hochsetzstellers festgelegt. Dadurch ergeben sich Zeiten einer Durchschaltung t_{D} und Zeiten einer Sperrung tₛ der einzelnen Schalter eines Hochsetzstellers (siehe Hochsetzsteller 5, 105 der Figuren 1, 2).

In Figur 10 wird eine alternative Ausgestaltung eines Kennfeldes mit Boostfaktoren gezeigt. Das Kennfeld nach Figur 10 schafft eine Beziehung zwischen einer aktuellen Drehzahl nₘ, indem zu zahlreichen Drehzahlen n Werte angeboten werden, einem Winkelmaß a, indem in (möglichst kleinen) Schritten Winkelmaße für die (jeweilige) Winkelstellung der Welle 75 des Generators 3 (siehe Figur 1) angeboten werden, und einem zugeordneten Boostfaktor B1^{l}, B2^{l}, B3^{l}, B4^{l}, B5^{l}, B6^{l}, B7^{l}. Aus dem jeweils ermittelten Boostfaktor B1^{l}, B2^{l}, B3^{l}, B4^{l}, B5^{l}, B6^{l}, B7^{l} wird dann mittels der Recheneinheit 35, 135 die Zeit für eine adäquate Durchschaltung t_{D} und die Zeit für eine adäquate Sperrung t_{S} bestimmt. Die Boostfaktoren B1^{l}, B2^{l}, B3^{l}, B4^{l}, B5^{l}, B6^{l}, B7^{l} liegen entlang einer konstanten Drehzahl n. Von einer konstanten Drehzahl kann zumindest während einer Halbwelle einer Generatorspannung bzw. Strangspannung U_{L12}, U_{L23}, U_{L13}, U_{L32} ausgegangen werden.

Das Kennfeld 39, 139 für die Boostfaktoren B1, B2, B3, B4, B5, B6 oder B1^{l}, B2^{l}, B3^{l}, B4^{l}, B5^{l}, B6^{l}, B7^{l} ist jeweils typisch für die Art des Generators und dessen Kurvenformen der Strangspannungen U_{L12}, U_{L23}, U_{L13}, U_{L32}. Mit anderen Worten, die Form des Kennfelds 39, 139 bzw. der Verlauf oder das Aussehen des Kennfelds 39, 139 hängt von dem Generator 3, 103 des Energieerzeugers 1, 101 ab. Mithilfe der Boostfaktoren B1, B2, B3, B4, B5, B6 oder B1^{l}, B2^{l}, B3^{l}, B4^{l}, B5^{l} wird ein, zumindest nahezu, nicht-lückender Strom ermöglicht, obwohl die Kurvenform der Strangspannungen U_{L12}, U_{L23}, U_{L13}, U_{L32} nicht sinusförmig ist. Das Kennfeld 39, 139 hat die geringsten Boostfaktoren im Bereich der Frequenz und des Winkelmaßes a, an denen eine höchste Scheitelspannung gegeben ist.

Für solche Generatoren wie den im Zusammenhang mit Figur 1 diskutierten Klauenpolgeneratoren wird das Boostfaktor-Kennfeld 39, 139 so gestaltet, dass es für jeden Werteset einen Boostfaktor gibt.

Die in den einzelnen Figuren gezeigten Ausgestaltungsmöglichkeiten lassen sich auch untereinander in zahlreichen weiteren Varianten verbinden. Z. B., die Aufspaltung an dem Brückengleichrichter 149 (siehe Figur 2) lässt sich auch an einem seriell betriebenen Brückengleichrichter 49 (siehe Figur 1) realisieren. Z.B., der Gleichspannungszwischenkreis 147 (siehe Figur 2) kann Teil weiterer Baugruppen sein.

**Bezugszeichenliste**

| **Bezugszeichen** | **Bedeutung** |
|---|---|
| 1, 101 | Energieerzeuger |
| 3, 103 | Generator |
| 5, 105 | Hochsetzsteller |
| 7, 7^{l}, 107 | Stromschalter |
| 9, 109 | Steuergerät |
| 11, 111 | Steuerung |
| 13, 113 | Berechnungseinheit, insbesondere des Steuergeräts |
| 15, 115 | Treiberstufe, insbesondere mit einer (integrierten) Schutztrennstufe |
| 17, 117 | Überspannungsschutz |
| 19, 119 | Strangstrombegrenzung |
| 21, 121 | erster Messeingang, insbesondere Spannungseingang |
| 23, 123 | zweiter Messeingang, insbesondere Triggereingang |
| 25, 125 | dritter Messeingang, insbesondere Spannungs- und/oder Stromeingang |
| 27 | vierter Messeingang, insbesondere Spannungs- und/oder Stromeingang |
| 29 | fünfter Messeingang, insbesondere Spannungs- und/oder Stromeingang |
| 31, 131 | Analog-Digital-Converter (ADC) |
| 33, 133 | Triggerfilterstufe |
| 35, 135 | Recheneinheit, z. B. eine CPU wie ein ATMEL-Prozessor des Typs A TmegaXX |
| 37, 137 | Umrechnungstabelle bzw. Speicher mit Umrechnungstabelle, insbesondere zwischen Generatorfrequenz und Ansteuerfrequenz |
| 39, 139 | Boostfaktor-Kennfeld bzw. Speicher mit Boostfaktor-Kennfeld |
| 41 | L-Faktor-Berechnungsstufe |
| 43, 143 | EMV-Filter |
| 45, 145 | Gleichspannungsenergiespeicher |
| 147 | Gleichspannungszwischenkreis |
| 49, 149 | Diodengleichrichter |
| 151 | Sinus-Wechselrichter |
| 53, 153 | erstes Leitungsbündel |
| 55, 155, 155^{l} | zweites Leitungsbündel |
| 57, 157 | Signalgeber, insbesondere Drehzahl- und/oder Drehwinkelsignalgeber |
| 59 | Generatorscheibe |
| 61, 161 | Versorgungsanschluss, insbesondere für eine Spannungsversorgung |
| 63, 163 | Last |
| 65, 165 | Feldsteuerausgang |
| 67, 67^{l}, 167 | Lastanschluss |
| 69, 69^{l} | erste Leitung |
| 71, 71^{l} | zweite Leitung |
| 73, 73^{l} | dritte Leitung |
| 75 | Welle |
| 177 | Erregerspannungsregelung |
| 79 | Wechselschalter |
| 81 | Energiehilfsquelle, insbesondere Starterbatterie eines Kraftfahrzeugs |
| L1 | erste Wicklung des Generators |
| L2 | zweite Wicklung des Generators |
| L3 | dritte Wicklung des Generators |
| L4 | Erregerspule |
| U_{ERR} | Erregerspannung |
| I_{L1} | erster Strangstrom |
| I_{L2} | zweiter Strangstrom |
| I_{L3} | dritter Strangstrom |
| UL12 | erste Strangspannung |
| U_{L23} | zweite Strangspannung |
| UL13 | dritte Strangspannung |
| U_{L32} | vierte Strangspannung |
| U_{Bus} | Busspannung |
| I_{Last} | Laststrom |
| S1, S1^{l}, S1^{ll} | Signal, insbesondere der Drehzahl bzw. eines Sets, umfassend einen Wert für eine Drehzahl der Generatorwelle |
| S2, S2^{l} | Signal, insbesondere der Last bzw. des gezogenen Stroms |
| S3 | Signal, insbesondere des Winkelmaßes und/oder der PWM-Frequenz |
| S4 | Signal, insbesondere einer Rechengröße für eine Momentanspannung |
| t₁ | erste Durchschaltzeit |
| t₂ | zweite Durchschaltzeit |
| tₙ₁, tₙ₂, tₙ₃, tₙ₄, tₙ₅, tₙ₆ | Zeitpunkt, insbesondere einer anliegenden Momentanspannung |
| f_{B} | Frequenzbereich |
| n | Drehzahl |
| n_{M} | Momentandrehzahl, insbesondere des Generators |
| n1 | Drehzahl, insbesondere erste Drehzahl des Generators |
| n2 | Drehzahl, insbesondere zweite Drehzahl des Generators |
| f_{A} | Ansteuerfrequenz |
| t_{B1} | Umschaltpunkt, insbesondere erster Umschaltpunkt |
| t_{B2} | Umschaltpunkt, insbesondere zweiter Umschaltpunkt |
| B | Boostfaktor |
| B1, B1^{I} | Boostfaktor, insbesondere erster Boostfaktor |
| B2, B2^{I} | Boostfaktor, insbesondere zweiter Boostfaktor |
| B3, B3^{I} | Boostfaktor, insbesondere dritter Boostfaktor |
| B4, B4^{I} | Boostfaktor, insbesondere vierter Boostfaktor |
| B5, B5^{I} | Boostfaktor, insbesondere fünfter Boostfaktor |
| B6, B6^{I} | Boostfaktor, insbesondere sechster Boostfaktor |
| B7^{I} | Boostfaktor, insbesondere siebter Boostfaktor |
| B₆ | Sechsbrücken-Gleichrichter |
| U_{M1} | Momentanspannung, insbesondere erste Momentanspannung |
| U_{M2} | Momentanspannung, insbesondere zweite Momentanspannung |
| U_{M3} | Momentanspannung, insbesondere dritte Momentanspannung |
| U_{M4} | Momentanspannung, insbesondere vierte Momentanspannung |
| U_{DC_{SOLL}} | Gleichspannungssollspannung |
| Uz | Zwischenspannung |
| P | Leistung |
| P1 | erster Ansteuerpunkt |
| P2 | zweiter Ansteuerpunkt |
| P_{HiPerGen} | Leistung bzw. Leistungskennlinie einer besonders vorteilhaften Ausführung der Erfindung |
| P_{Prior} | Leistungskennlinie, insbesondere ohne erfindungsgemäßer Optimierung |
| t_{D} | Durchschaltung, insbesondere Phase bzw. Zeit einer Durchschaltung |
| t_{S} | Sperrung, insbesondere Phase bzw. Zeit einer Sperrung |
| T1, T1^{I},T2, T2^{I}, T3, T3^{I}, T4, T4^{I}, T5, T5^{I}, T6, T6^{I} | Schalter, insbesondere N-Kanal-MOS-FET |
| D1, D2, D3, D4, D5, D6 | Diode |
| R1, R1^{I}, R2, R2^{I}, R3, R3^{I}, R4, R4^{I}, R5, R5^{I}, R6, R6^{I} | Widerstand, insbesondere Vorsteuerwiderstand vor einem Gate eines Schalters T1, T1^{l}, T2, T2^{l}, T3, T3^{l}, T4, T4^{l}, T5, T5^{l}, T6, T6^{l} |
| α | Winkelmaß |

## Patentansprüche

1. Verfahren zum, insbesondere leistungsoptimierten, Betrieb eines Generators (3, 103) mit einem Hochsetzsteller (5, 105) mit Stromschaltern (7, 7^{l}, 107),
mit einer Steuerung (11, 111) und
mit einem Gleichspannungsenergiespeicher (45, 145), z. B. einem Gleichspannungszwischenkreis (147) oder einem Gleichspannungsspeicherelement,
**dadurch gekennzeichnet, dass**
das Verfahren zumindest mit einer Optimierung arbeitet, wobei:
a) die Steuerung (11, 111) für die Bildung mehrerer Boostfaktoren (B, B1, B2, B3, B4, B5, B6) gestaltet ist, mit den Schritten:
a1) Bestimmen der Momentanspannungen (U_{M1}, U_{M2}, U_{M3}, U_{M4}),
die aus einer im zeitlichen Verlauf veränderbaren Generatorspannung (U_{L12}, U_{L23}, U_{L13}) und zu verschiedenen Zeitpunkten (tₙ₁, tₙ₂, tₙ₃, tₙ₄, tₙ₅, tₙ₆) bestimmbar sind, durch Bestimmen einer Winkelposition des Generators (3, 103) und Ermitteln oder Berechnen der zugehörigen Momentanspannung (U_{M1}, U_{M2}, U_{M3}, U_{M4});
a2) Bestimmen oder Ermitteln von Ansteuerpunkten der Stromschalter (7, 7', 107) aus den Momentanspannungen (UM1 , UM2 , UM3 , UM4 ) als Rechengröße (S4),
a3) Bilden oder Bestimmern der im zeitlichen Verlauf veränderbaren Boostfaktoren (B, B1, B2, B3, B4, B5, B6), die aus den im zeitlichen Verlauf veränderbaren Generatorspannung (UL12 , UL23, UL13) bestimmbar sind,
a4) Ansteuern der Stromschaltern (7, 7', 107) an den Ansteuerpunkten in Abhängigkeit der Boostfaktoren.

2. Verfahren nach Anspruch 1, **dadurch gekennzeichnet, dass** der Hochsetzsteller (5, 105) ein durch eine Pulsweitenmodulation in seinen Durchschaltzeiten (t_{D}) veränderbarer Hochsetzsteller (5, 105) ist,
der in einem Frequenzbereich (f_{B}) durch eine Treiberstufe (15, 115) angesteuert wird,
wobei eine Ansteuerfrequenz (f_{A}) in Abhängigkeit einer Drehzahl (n, n_{M}, n1, n2) des Generators (3, 103) variiert wird, wobei eine stückweise stetige, insbesondere lineare, Proportionalität zwischen Drehzahl (n, n_{M}, n1, n2) und Ansteuerfrequenz (f_{A}) befolgt wird, die bei Erreichen wenigstens eines Umschaltpunkts (t_{B1}, t_{B2}) durch einen unstetigen Sprung angepasst wird, insbesondere bei einem Übergang von einer ersten, niedrigeren Drehzahl (n1) auf eine zweite, höhere Drehzahl (n2) des Generators (3, 103) wird die Ansteuerfrequenz (f_{A}) reduziert.

3. Verfahren nach Anspruch 1 oder 2, **dadurch gekennzeichnet, dass** das Bestimmen der Momentanspannungen (U_{M1}, U_{M2}, U_{M3}, U_{M4}) durch Bestimmen einer Winkelposition des Generators (3, 103) nachfolgende Schritte umfasst:
a) Messen der Winkelposition des Generators (3, 103) mit einer Generatorscheibe;
b) Berechnen des Winkelwerts in einen Spannungswert der Momentanspannung (U_{M1}, U_{M2}, U_{M3}, U_{M4}); und/oder
c) Ermitteln des Spannungswerts der Momentanspannung (U_{M1}, U_{M2}, U_{M3}, U_{M4}) aus einem Tabellenwerk.

4. Verfahren zur Steuerung eines Generators (3, 103) nach einem der vorhergehenden Ansprüche , **dadurch gekennzeichnet, dass** die Ansteuerfrequenz (f_{A}), insbesondere stets, d. h. zu allen Drehzahlen (n, n_{M}, n1, n2) des Generators (3, 103), höherfrequent ist als eine Momentandrehzahl (n_{M}) des Generators (3, 103), wodurch vorzugsweise ein nicht lückender Laststrom (I_{Last}) an eine Last (63, 163), insbesondere mehrphasig, abgebbar ist, der insbesondere einen sinusähnlichen Verlauf hat.

5. Verfahren zur Steuerung eines Generators (3, 103) nach einem der vorhergehenden Ansprüche, **dadurch gekennzeichnet, dass** die Steuerung (11, 111) mithilfe eines Steuergeräts (9, 109) realisiert wird, wobei das Steuergerät (9, 109) in Abhängigkeit einer Drehzahl (n, n_{M}, n1, n2) wie der Momentandrehzahl (n_{M}) des Generators (3, 103) eine Steuerung (11, 111) der Stromschalter (7, 7', 107), insbesondere von wenigstens zwei N-Kanal-Anreicherungstyp-MOS-FETs (T1, T1^{l}, T2, T2^{l}, T3, T3^{l}, T4, T4^{l}, T5, T5^{l}, T6, T6^{l}), des Hochsetzstellers (5, 105) durchführt, und insbesondere der Gleichspannungsenergiespeicher (45, 145) oder eine Energiehilfsquelle (81) wie eine Starterbatterie Energie anhand einer Erregerspannung (U_{ERR}) für eine Erregung des Generators (3, 103) liefert, und vorzugsweise die Steuerung (11, 111) während eines Verlaufs einer Spannungsform, die aus dem Generator (3, 103) stammt, die Boostfaktoren (B, B1, B2, B3, B4, B5, B6) bildet.

6. Verfahren zur Steuerung eines Generators (3, 103) nach einem der vorhergehenden Ansprüche, **dadurch gekennzeichnet, dass** Phasen mit einer Durchschaltzeit (t_{D}, t₁, t₂), insbesondere der Stromschalter (7, 7', 107), angepasst werden, während eine Gesamtzeit, gebildet aus Phasen mit einer Sperrzeit (t_{S}), insbesondere der Stromschalter (7, 7', 107), und aus Phasen mit einer Durchschaltzeit (t_{D}, t₁, t₂), konstant gehalten werden,
wobei vorzugsweise ein Verhältnis der Phasen dem Boostfaktor (B, B1, B2, B3, B4, B5, B6) entspricht.

7. Vorrichtung (1, 101) zur Energieerzeugung einer elektrischen Energie,
mit einem elektrischen Generator (3, 103), der insbesondere elektrisch erregbar ist, und mit einem, insbesondere elektronischen, Hochsetzsteller (5, 105), insbesondere einem mehrphasigen Hochsetzsteller, und mit einem Steuergerät (9, 109), das für eine Ansteuerung in Abhängigkeit einer Drehzahl (n, n_{M}, n1, n2) des Generators (3, 103) einer Steuerung (11, 111) von Stromschaltern (7, 7', 107) des Hochsetzstellers (5, 105) ausgestaltet ist, wobei mithilfe des Steuergeräts (9, 109) ein Verfahren nach einem der Ansprüche 1 bis 6 in der Vorrichtung (1, 101) betrieben wird, und
mit einem Gleichspannungsenergiespeicher (45, 145), wie einem Gleichspannungszwischenkreis (147) oder einem Gleichspannungsspeicherelement, aus dem insbesondere eine veränderbare Erregerspannung (U_{ERR}) für den Generator (3, 103) beziehbar ist, und/oder mit einer Energiehilfsquelle wie einer Starterbatterie für eine Erregerspannung (U_{ERR}) des Generators (3, 103),
**dadurch gekennzeichnet, dass**
die Steuerung (11, 111) beide Gestaltungen umfasst:
a) eine Gestaltung für die Bildung mehrerer Boostfaktoren (B, B1, B2, B3, B4, B5, B6), wobei Momentanspannungen (U_{M1}, U_{M2}, U_{M3}, U_{M4}),
die aus einer im zeitlichen Verlauf veränderbaren Generatorspannung (U_{L12}, U_{L13}, U_{L23}, U_{L32}) und zu verschiedenen Zeitpunkten (tₙ₁, tₙ₂, tₙ₃, tₙ₄, tₙ₅, tₙ₆) bestimmbar sind,
als Rechengröße für eine Ermittlung von Ansteuerpunkten der Stromschalter (7, 7', 107) dienend zu den im zeitlichen Verlauf veränderbaren Boostfaktoren (B, B1, B2, B3, B4, B5, B6) führen und
b) die Steuerung (11, 111) für die Steuerung des Hochsetzstellers (5, 105) ausgestaltet ist, wobei der Hochsetzsteller (5, 105) ein durch eine Pulsweitenmodulation in seinen Durchschaltzeiten (t_{D}) veränderbarer Hochsetzsteller (5, 105) ist,
der in einem Frequenzbereich (f_{B}) durch eine Treiberstufe (15, 115) ansteuerbar ist, wobei eine Ansteuerfrequenz (f_{A}) in Abhängigkeit einer Drehzahl (n, n_{M}, n1, n2) des Generators (3, 103) variabel ist, wobei eine stückweise stetige, insbesondere lineare, Proportionalität zwischen Drehzahl (n, n_{M}, n1, n2) und Ansteuerfrequenz (f_{A}) befolgt wird, die bei Einnahme wenigstens eines Umschaltpunkts (t_{B1}, t_{B2}) durch einen unstetigen Sprung anzupassen ist, insbesondere bei einem Übergang von einer ersten, niedrigeren Drehzahl (n1) auf eine zweite, höhere Drehzahl (n2) des Generators (3, 103) wird die Ansteuerfrequenz (f_{A}) reduziert.

8. Vorrichtung (1, 101) nach Anspruch 7, **dadurch gekennzeichnet, dass** der Generator (3, 103) ein Klauenpolgenerator ist, insbesondere mit wenigstens 12 Polen, also 6 Polpaaren, und/oder dass
die Stromschalter (7, 7^{l}, 107) Stromschalter sind, die pulsweitenmoduliert steuerbar sind.

9. Vorrichtung (1, 101) nach einem der Ansprüche 7 oder 8, **dadurch gekennzeichnet, dass** die jeweilige Momentanspannung (U_{M1}, U_{M2}, U_{M3}, U_{M4}) anhand einer Winkelpositionen (a) angebenden Generatorscheibe (59) in einer Recheneinheit (35, 135) der Steuerung (11, 111) aus einem Tabellenwerk ermittelbar ist.

10. Vorrichtung (1, 101) nach einem der Ansprüche 7 bis 9, **dadurch gekennzeichnet,**
**dass** die Steuerung (11, 111) eine Treiberstufe (15, 115) umfasst, die für Frequenzen (f_{B}) ausgelegt ist, die, insbesondere auch in einem Leerlauflangsammodus des Generators (3, 103), ein Mehrfaches einer Generatordrehfrequenz betragen.

11. Vorrichtung (1, 101) nach einem der Ansprüche 7 bis 10, **dadurch gekennzeichnet, dass** der Hochsetzsteller (5, 105) induktivitätenfrei ist, mithilfe dessen durch Nutzung von Generatorwicklungen (L1, L2, L3) als Speicherelemente für elektrische Energie eine Spannungserhöhung (U_{DC_{SOLL}}) vornehmbar ist und/oder dass der Hochsetzsteller (5, 105) ein mehrphasiger, insbesondere wenigstens drei-phasiger, Hochsetzsteller ist.

12. Vorrichtung (1, 101) nach einem der Ansprüche 7 bis 11, **dadurch gekennzeichnet, dass** dem Gleichspannungsenergiespeicher (45, 145) ein Sinus-Wechselrichter (151) folgt, an den eine Last (63, 163) anschließbar ist oder eine Gleichspannungsenergiequelle wie ein Akkumulator angeschlossen ist.

13. Vorrichtung (1, 101) nach einem der Ansprüche 7 bis 12, **dadurch gekennzeichnet, dass** die Steuerung (11, 111) einen Eingang (21, 121)für die Erregerspannung (U_{ERR}) hat, insbesondere in Parallelschaltung zu einer Erregerspule (L4) des Generators (3, 103).

14. Vorrichtung (1, 101) nach einem der Ansprüche 7 bis 13, **dadurch gekennzeichnet, dass** zwischen Spannungssträngen des Generators (3, 103) und dem Hochsetzsteller (5, 105) zumindest eines der beiden zwischengeschaltet ist, ein EMV-Filter (43, 143), der insbesondere Harmonische filtert, und/oder ein Diodengleichrichter (49, 149), insbesondere ein Mehrphasen-Diodengleichrichter.

15. Vorrichtung (1, 101) nach einem der Ansprüche 7 bis 14, **dadurch gekennzeichnet, dass** in die Steuerung (11, 111) ein Überspannungsschutz (17, 117) und/oder eine Strangstrombegrenzung (19, 119) integriert ist.

## Claims

1. Method for operating a generator, in particular, with power-optimised operation (3, 103) with a step-up converter (5, 105) with current switches (7, 71, 107)
with a control unit (11, 111) and
with a direct voltage energy storage device (45, 145), e.g. a direct voltage intermediate circuit (147) or a direct voltage storage element
**characterised in that**
the method works at least with one optimisation, whereby:
a) the control (11, 111) is designed for the formation of several boost factors (B, B1, B2, B3, B4, B5, B6), with the steps
a1) Determination of the instantaneous voltages (_{UM1}, _{UM2}, _{UM3}, _{UM4}),
which can be determined from a generator voltage which can be changed over time (U_{L12}, U_{L23}, U_{L13}) and at different times (tₙ₁, tₙ₂, tₙ₃, tₙ₄, tₙ₅, tₙ₆), by determining an angular position of the generator (3, 103) and determining or calculating the associated instantaneous voltage (U_{M1}, U_{M2}, U_{M3}, U_{M4});
a2) Determination or detection of control set points of the current switches (7, 7', 107) from the instantaneous voltages (UM1, UM2, UM3, UM4) as a calculation variable (S4),
a3) Formation or determination of the boost factors (B, B1, B2, B3, B4, B5, B6) which can be changed over time and which can be determined from the generator voltage (UL12, UL23, UL13) which can be changed over time, ,
a4) Control of the current switches (7, 7', 107) at the control set points depending on the boost factors.

2. Method according to claim 1, **characterized in that** the step-up converter (5, 105) is a step-up converter (5, 105) whose switching times (t_{D}) can be changed by pulse width modulation,
which is driven in a frequency range (f_{B}) by a driver stage (15, 115),
wherein a control input frequency (f_{A}) is varied as a function of a rotational speed (n, nM, n1, n2) of the generator (3, 103), wherein a piecewise continuous, in particular linear, proportionality between rotational speed (n, n_{M}, n1, n2) and control input frequency (f_{A}) is followed, which is adapted by an unsteady jump when at least one changeover point (t_{B1}, t_{B2}) is reached, in particular when the generator (3, 103) changes from a first, lower speed (n1) to a second, higher speed (n2), the control input frequency (f_{A}) is reduced.

3. Method according to claim 1 or 2, **characterized in that** the determination of the instantaneous voltages (_{UM1}, _{UM2}, _{UM3}, _{UM4}) by determining an angular position of the generator (3, 103) comprises the following steps:
a) Measuring the angular position of the generator (3, 103) with a generator disc;
b) converting the angle value into a voltage value of the instantaneous voltage (_{UM1}, _{UM2}, _{UM3}, _{UM4}); and/or
c) Determining the voltage value of the instantaneous voltage (U_{M1}, U_{M2}, U_{M3}, U_{M4}) from a table.

4. Method for controlling a generator (3, 103) according to one of the preceding claims, **characterized in that** the control input frequency (f_{A}), in particular always, i.e. at all speeds (n, n_{M}, n1, n2) of the generator (3, 103), is higher than an instantaneous speed (n_{M}) of the generator (3, 103),whereby preferably a non-interrupted load current (_{ILast}) can be delivered to a load (63, 163), in particular in a multi-phase manner, which in particular has a sinusoidal characteristic.

5. Method for controlling a generator (3, 103) according to one of the preceding claims, **characterized in that** the control (11, 111) is implemented with the aid of a control unit (9, 109), wherein the control device (9, 109), depending on a rotational speed (n, n_{M}, n1, n2) such as the instantaneous rotational speed (n_{M}) of the generator (3, 103), controls (11, 111) the current switches (7, 71, 107), in particular at least two N-channel enhancement type MOS-FETs (T1, T1^{l}, T2, T2^{l}, T3, T3^{l}, T4, T4^{l}, T5, T5^{l}, T6, T6^{l}), of the step-up converter (5, 105), and
in particular the direct voltage energy storage device (45, 145) or an auxiliary energy source (81) such as a starter battery supplies energy on the basis of an excitation voltage (U_{ERR}) for excitation of the alternator (3, 103), and
preferably the control (11, 111) during a progression of a voltage waveform originating from the generator (3, 103) forms the boost factors (B, B1, B2, B3, B4, B5, B6)

6. Method for controlling a generator (3, 103) according to one of the preceding claims, **characterized in that** phases with a switch-on time (t_{D}, t₁, t₂), in particular of the current switches (7, 7^{l}, 107), are adapted while a total time formed by phases with an inhibition time (t_{S}), in particular of the current switches (7, 7^{l}, 107), and by phases with a switch-on time (to, t₁, t₂), are kept constant,
where preferably a ratio of the phases corresponds to the boost factor (B, B1, B2, B3, B4, B5, B6)

7. Device (1, 101) for generating electrical energy,
with an electric generator (3, 103), which is in particular electrically excitable, and
with an, in particular electronic, step-up converter (5, 105), in particular a multi-phase step-up converter, and with a control unit (9, 109) which is designed for actuation, as a function of a rotational speed (n, n_{M}, n1, n2) of the generator (3, 103), of a controller (11, 111) of current switches (7, 7^{l}, 107) of the step-up converter (5, 105), a method according to one of claims 1 to 6 being operated in the device (1, 101) with the aid of the control unit (9, 109), and
with a direct voltage energy store (45, 145), such as a direct voltage intermediate circuit (147) or a direct voltage storage element, from which in particular a variable excitation voltage (U_{ERR}) for the generator (3, 103) can be obtained, and/or with an auxiliary energy source such as a starter battery for an excitation voltage (U_{ERR}) of the generator (3, 103),
**characterised in that**
the control (11, 111) includes both designs:
a) a design for the formation of several boost factors (B, B1, B2, B3, B4, B5, B6), where instantaneous voltages (U_{M1}, U_{M2}, U_{M3}, U_{M4}),
which can be determined from a generator voltage which can be changed over time (U_{L12}, U_{L13}, U_{L23}, U_{L32}) and at different times (tₙ₁, tₙ₂, tₙ₃, tₙ₄, tₙ₅, tₙ₆),
serve as a calculation variable for determining the control points of the current switches (7, 7^{l}, 107) and lead to the boost factors (B, B1, B2, B3, B4, B5, B6) that can be changed over time
and
b) the controller (11, 111) is designed for controlling the step-up converter (5, 105),
wherein the step-up converter (5, 105) is a step-up converter (5, 105) whose switching times (t_{D}) can be changed by pulse width modulation,
which can be controlled in a frequency range (f_{B}) by a driver stage (15, 115),
wherein a control input frequency (f_{A}) is variable in dependence on a rotational speed (n, n_{M}, n1, n2) of the generator (3, 103), wherein a piecewise continuous, in particular linear, proportionality between rotational speed (n, n_{M}, n1, n2) and control input frequency (f_{A}) is followed, which must be adjusted by a discontinuous jump when at least one changeover point (t_{B1}, t_{B2}) is reached, in particular when the generator (3, 103) changes from a first, lower speed (n1) to a second, higher speed (n2), the control input frequency (f_{A}) is reduced.

8. A device (1, 101) according to claim 7, **characterized in that**
the generator (3, 103) is a claw pole generator, in particular with at least 12 poles, i.e. 6 pairs of poles, and/or that
the current switches (7, 7^{l}, 107) are current switches which can be controlled by pulse width modulation.

9. Device (1, 101) according to one of claims 7 or 8, **characterized in that** the respective instantaneous voltage (U_{M1}, U_{M2}, U_{M3}, U_{M4}) can be determined from a set of tables with the aid of a generator disc (59) specifying angular positions (α) in a computing unit (35, 135) of the controller (11, 111).

10. Device (1, 101) according to one of claims 7 to 9, **characterized in that** the controller (11, 111) comprises a driver stage (15, 115) which is designed for frequencies (f_{B}) which are a multiple of a generator rotational frequency, in particular also in an idle slow mode of the generator (3, 103).

11. Device (1, 101) according to one of claims 7 to 10, **characterized in that** the step-up converter (5, 105) is inductance-free, with the aid of which a voltage increase (U_{DC_{SOLL}}) can be carried out by using generator windings (L1, L2, L3) as storage elements for electrical energy and/or **in that** the step-up converter (5, 105) is a multiphase, in particular at least three-phase, step-up converter.

12. Device (1, 101) according to one of claims 7 to 11, **characterized in that** the direct voltage energy store (45, 145) is followed by a sine wave inverter (151) to which a load (63, 163) can be connected or a direct voltage energy source such as an accumulator is connected.

13. Device (1, 101) according to one of claims 7 to 12, **characterised in that** the control unit (11, 111) has an input (21, 121) for the excitation voltage (U_{ERR}), in particular in parallel with an excitation coil (L4) of the generator (3, 103).

14. Device (1, 101) according to one of claims 7 to 13, **characterized in that** at least one of the following two elements is interposed between voltage strings of the generator (3, 103) and the step-up converter (5, 105), an EMC filter (43, 143), which in particular filters harmonics, and/or a diode rectifier (49, 149), in particular a multi-phase diode rectifier.

15. Device (1, 101) according to one of claims 7 to 14, **characterised in that** an overvoltage protection (17, 117) and/or a string current limiter (19, 119) is integrated in the control unit (11, 111).

## Revendications

1. Procédé, en particulier, pour le fonctionnement optimisé d'un générateur (3, 103) avec un convertisseur élévateur (5, 105) équipé d'interrupteurs de courant (7, 7^{l}, 107), avec une commande (11, 111) et
avec un accumulateur d'énergie à tension continue (45, 145), par exemple un circuit intermédiaire de tension continue (147) ou un élément de stockage de tension continue,
**caractérisé en ce que**
le procédé fonctionne avec au moins une optimisation, où :
a) la commande (11, 111) est conçue pour la création de plusieurs facteurs de suralimentation (B, B1, B2, B3, B4, B5, B6), suivant les étapes ci-dessous :
a1) détermination des tensions instantanées (UM1, UM2, UM3, UM4) qui peuvent être déterminées à partir d'une tension de générateur modifiable dans le temps (U_{L12}, U_{L23}, U_{L13}) et à différents moments (tₙ₁, tₙ₂, tₙ₃, tₙ₄, tₙ₅, tₙ₆) en déterminant une position angulaire du générateur (3, 103) et en indiquant ou en calculant la tension instantanée associée (U_{M1}, U_{M2}, U_{M3}, U_{M4}) ;
a2) détermination ou indication des points de commande des interrupteurs de courant (7, 7', 107) à partir des tensions instantanées (UM1, UM2, UM3, UM4) en tant que grandeurs calculées (S4),
a3) création ou détermination des facteurs de suralimentation (B, B1, B2, B3, B4, B5, B6) modifiables dans le temps, pouvant être déterminés à partir de la tension de générateur modifiable dans le temps (UL12, UL23, UL13), ,
a4) commande des interrupteurs de courant (7, 7', 107) aux points de commande, en fonction des facteurs de suralimentation.

2. Procédé selon la revendication 1, **caractérisé en ce que** le convertisseur élévateur (5, 105) est un convertisseur élévateur (5, 105) dont les temps de commutation (t_{D}) peuvent être modifiés au moyen d'une modulation de largeur d'impulsion
et qui est commandé dans une plage de fréquences (f_{B}) par un étage d'attaque (15, 115),
où une fréquence de commande (f_{A}) varie en fonction d'une vitesse de rotation (n, n_{M}, n1, n2) du générateur (3, 103), où l'on suit une proportionnalité progressivement constante, en particulier linéaire, entre la vitesse de rotation (n, n_{M}, n1, n2) et la fréquence de commande (f_{A}) qui s'adapte à l'aide d'un saut discontinu lorsqu'au moins un point de commutation (t_{B1}, t_{B2}) est atteint, en particulier, lors d'un passage d'une première vitesse de rotation inférieure (n1) à une deuxième vitesse de rotation supérieure (n2) du générateur (3, 103), la fréquence de commande (f_{A}) est réduite.

3. Procédé selon la revendication 1 ou 2, **caractérisé en ce que** la détermination des tensions instantanées (U_{M1}, U_{M2}, U_{M3}, U_{M4}) par la détermination d'une position angulaire du générateur (3, 103) comprend les étapes suivantes :
a) mesure de la position angulaire du générateur (3, 103) avec un disque de générateur;
b) calcul de la valeur d'angle en une valeur de tension instantanée (U_{M1}, U_{M2}, U_{M3}, U_{M4}) et/ou
c) détermination de la valeur de tension instantanée (U_{M1}, U_{M2}, U_{M3}, U_{M4}) à partir de tableaux.

4. Procédé de commande d'un générateur (3, 103) selon l'une quelconque des revendications précédentes, **caractérisé en ce que** la fréquence de commande (f_{A}) est toujours, c'est-à-dire à toutes les vitesses de rotation (n, n_{M}, n1, n2) du générateur (3, 103), plus élevée qu'une vitesse instantanée (n_{M}) du générateur (3, 103), où, de préférence, un courant de charge ininterrompu (I_{Last}) pour une charge (63, 163) peut être émis, en particulier de manière polyphasée et présente notamment une course sinusoïdale.

5. Procédé de commande d'un générateur (3, 103) selon l'une quelconque des revendications précédentes, **caractérisé en ce que** la commande (11, 111) se fait grâce à un dispositif de commande (9, 109), le dispositif de commande (9, 109) assurant, en fonction d'une vitesse de rotation (n, n_{M}, n1, n2), telle que la vitesse instantanée (n_{M}) du générateur (3, 103), la commande (11, 111) des interrupteurs de courant (7, 7^{l}, 107), en particulier d'au moins deux MOS-FET de type enrichissement de canal N (T1, T1^{l}, T2, T2^{l}, T3, T3^{l}, T4, T4^{l}, T5, T5^{l}, T6, T6^{l}) du convertisseur élévateur (5, 105) et
où, en particulier l'accumulateur d'énergie à tension continue (45, 145) ou une source d'énergie auxiliaire (81), telle qu'une batterie de démarrage, fournit de l'énergie sur la base d'une tension d'excitation (U_{ERR}) pour exciter le générateur (3, 103), et
où, de préférence, la commande (11, 111) crée, pendant une course d'un type de tension provenant du générateur (3, 103), les facteurs de suralimentation (B, B1, B2, B3, B4, B5, B6).

6. Procédé de commande d'un générateur (3, 103) selon l'une quelconque des revendications précédentes, **caractérisé en ce que** les phases avec un temps de commutation (t_{D}, t₁, t₂), en particulier des interrupteurs de courant (7, 7l, 107), sont adaptées tandis qu'un temps total, constitué de phases avec un temps de blocage (t_{S}), en particulier des interrupteurs de courant (7, 7^{l}, 107), et de phases avec un temps de commutation (t_{D}, t₁, t₂), reste constant,
un rapport des phases correspondant, de préférence, au facteur de suralimentation (B, B1, B2, B3, B4, B5, B6).

7. Dispositif (1, 101) pour générer de l'énergie électrique,
doté d'un générateur électrique (3, 103) qui peut notamment être excité électriquement, d'un convertisseur élévateur (5, 105) notamment électronique, en particulier un convertisseur élévateur polyphasé, d'un dispositif de commande (9, 109) qui sert à l'activation, en fonction d'une vitesse de rotation (n, n_{M}, n1, n2) du générateur (3, 103), d'une commande (11, 111) d'interrupteurs de courant (7, 7^{l}, 107) du convertisseur élévateur (5, 105), où, à l'aide du dispositif de commande (9, 109), un procédé selon l'une quelconque des revendications 1 à 6 est actionné dans le dispositif (1, 101), et d'un accumulateur d'énergie à tension continue (45, 145), tel qu'un circuit intermédiaire de tension continue (147) ou un élément de stockage de tension continue, à partir duquel notamment une tension d'excitation variable (U_{ERR}) pour le générateur (3, 103) peut être obtenue, et/ou d'une source d'énergie auxiliaire, telle qu'une batterie de démarrage, pour une tension d'excitation (U_{ERR}) du générateur (3, 103),
**caractérisé en ce que**
la commande (11, 111) comprend les deux conceptions suivantes :
a) une conception pour la création de plusieurs facteurs de suralimentation (B, B1, B2, B3, B4, B5, B6),
où les tensions instantanées (U_{M1}, U_{M2}, U_{M3}, U_{M4})
qui peuvent être déterminées à partir d'une tension de générateur (U_{L12}, U_{L13}, U_{L23}, U_{L32}) modifiable dans le temps et à des moments différents (tₙ₁, tₙ₂, tₙ₃, tₙ₄, tₙ₅, tₙ₆),
en tant que grandeurs calculées pour déterminer les points de commande des interrupteurs de courant (7, 7^{l}, 107), sont utilisées pour créer les facteurs de suralimentation (B, B1, B2, B3, B4, B5, B6) modifiables dans le temps
et
b) une conception dans laquelle la commande (11, 111) est conçue pour commander le convertisseur élévateur (5, 105), le convertisseur élévateur (5, 105) étant un convertisseur élévateur (5, 105) dont les temps de commutation (t_{D}) peuvent être modifiés au moyen d'une modulation de largeur d'impulsion
et qui peut être commandé dans une plage de fréquences (f_{B}) par un étage d'attaque (15, 115),
où une fréquence de commande (f_{A}) varie en fonction d'une vitesse de rotation (n, n_{M}, n1, n2) du générateur (3, 103), où l'on suit une proportionnalité progressivement constante, en particulier linéaire, entre la vitesse de rotation (n, n_{M}, n1, n2) et la fréquence de commande (f_{A}) qui doit s'adapter à l'aide d'un saut discontinu lorsqu'au moins un point de commutation (t_{B1}, t_{B2}) est atteint, en particulier, lors d'un passage d'une première vitesse de rotation inférieure (n1) à une deuxième vitesse de rotation supérieure (n2) du générateur (3, 103), la fréquence de commande (f_{A}) est réduite.

8. Dispositif (1, 101) selon la revendication 7, **caractérisé en ce que** le générateur (3, 103) est un générateur de pôles à griffes, en particulier doté d'au moins 12 pôles, soit 6 paires de pôles, et/ou **en ce que**
les interrupteurs de courant (7, 7^{l}, 107) sont des interrupteurs de courant pouvant être commandés avec une modulation de largeur d'impulsion.

9. Dispositif (1, 101) selon l'une quelconque des revendications 7 ou 8, **caractérisé en ce que** la tension instantanée respective (U_{M1}, U_{M2}, U_{M3}, U_{M4}) peut être déterminée à partir de tableaux dans une unité de calcul (35, 135) de la commande (11, 111) à l'aide d'un disque de générateur (59) indiquant les positions angulaires (a).

10. Dispositif (1, 101) selon l'une quelconque des revendications 7 à 9, **caractérisé en ce que** la commande (11, 111) comprend un étage d'attaque (15, 115), conçu pour des fréquences (f_{B}) qui, en particulier, même en mode ralenti en marche à vide du générateur (3, 103), sont un multiple d'une fréquence de rotation du générateur.

11. Dispositif (1, 101) selon l'une quelconque des revendications 7 à 10, **caractérisé en ce que** le convertisseur élévateur (5, 105) est sans inductance et permet d'augmenter la tension (UCCDECONSIGNE) en utilisant des enroulements de générateur (L1, L2, L3) comme éléments de stockage d'énergie électrique et/ou **en ce que** le convertisseur élévateur (5, 105) est un convertisseur élévateur polyphasé, en particulier au moins triphasé.

12. Dispositif (1, 101) selon l'une quelconque des revendications 7 à 11, **caractérisé en ce que** l'accumulateur d'énergie à tension continue (45, 145) est suivi d'un onduleur sinusoïdal (151) auquel une charge (63, 163) peut être associée ou auquel une source d'énergie à tension continue, telle qu'un accumulateur, est associée.

13. Dispositif (1, 101) selon l'une quelconque des revendications 7 à 12, **caractérisé en ce que** la commande (11, 111) possède une entrée (21, 121) pour la tension d'excitation (U_{ERR}), notamment en montage en parallèle avec une bobine d'excitation (L4) du Générateur (3, 103).

14. Dispositif (1, 101) selon l'une quelconque des revendications 7 à 13, **caractérisé en ce qu'**entre les lignes de tension du générateur (3, 103) et le convertisseur élévateur (5, 105), au moins l'un des deux éléments suivants est interposé : un filtre CEM (43, 143) filtrant notamment les harmoniques et/ou un redresseur à diodes (49, 149), en particulier un redresseur à diodes polyphasées.

15. Dispositif (1, 101) selon l'une quelconque des revendications 7 à 14, **caractérisé en ce qu'**une protection contre les surtensions (17, 117) et/ou un limiteur de courant de phase (19, 119) est intégré) à la commande (11, 111).
